(19) Europäisches Patentamt / European Patent Office / Office européen des brevets

(11) **EP 4 733 745 A1**

(12) **EUROPEAN PATENT APPLICATION**
published in accordance with Art. 153(4) EPC

(43) Date of publication:
**29.04.2026 Bulletin 2026/18**

(21) Application number: **24825822.0**

(22) Date of filing: **14.06.2024**

(51) International Patent Classification (IPC):
**G01N 21/64** (2006.01)  **G02B 21/00** (2006.01)
**G02B 21/36** (2006.01)

(52) Cooperative Patent Classification (CPC):
**G01N 21/64; G02B 21/00; G02B 21/36**

(86) International application number:
**PCT/JP2024/021608**

(87) International publication number:
**WO 2024/262419 (26.12.2024 Gazette 2024/52)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority:  **22.06.2023  JP 2023102761**

(71) Applicant: **Sony Group Corporation
Tokyo 108-0075 (JP)**

(72) Inventor: **KUNIHIRO, Takeshi
Tokyo 108-0075 (JP)**

(74) Representative: **D Young & Co LLP
3 Noble Street
London EC2V 7BQ (GB)**

(54) **INFORMATION PROCESSING DEVICE, INFORMATION PROCESSING METHOD, AND INFORMATION PROCESSING SYSTEM**

(57)    An information processing apparatus according to the present disclosure includes a calculation unit configured to calculate a correction coefficient per fluorescence wavelength, based on a captured image output from an imaging section, the correction coefficient being a coefficient for correcting shading of the captured image, and a correction unit configured to perform shading correction on the captured image per fluorescence wavelength, based on the correction coefficient.

Fig. 12

**Description**

Technical Field

The present disclosure relates to an information processing apparatus, an information processing method, and an information processing system.

Background Art

A system is known that captures a specimen fluorescently multi-stained with a plurality of fluorescent pigments having different emission wavelengths, and acquires whole slide imaging (WSI). Such a system, for example, performs capturing for each of emission wavelengths of fluorescent pigments while moving a capturing region, and combines the images captured in all the capturing regions, thereby acquiring WSI.

Citation List

Patent Literature

PTL1: JP 2016-099570 A

Non Patent Literature

NPL 1: Sneha berry and 35 others, "Analysis of multispectral imaging with the AstroPath platform informs efficacy of PD-1 blockade", [online], June 11, 2021, SCIENCE, Vol 372, Issue 6547, [retrieved on May 15, 2023], Internet, <https://www.science.org/doi/10.1126/science.aba2609>

Summary of Invention

Technical Problem

In a system that captures fluorescently multi-stained WSI, shading on capturing data may appear as artifacts in a periodic pattern. In addition, the relationship between wavelengths may change due to the shading, and it may be difficult to obtain a correct fluorescence image in color separation processing.

Therefore, an object of the present disclosure is to provide an information processing apparatus, an information processing method, and an information processing system capable of suppressing shading on capturing data in a system that captures fluorescently multi-stained WSI.

Solution to Problem

An information processing apparatus according to the present disclosure includes a calculation unit configured to calculate a correction coefficient per fluorescence wavelength, based on a captured image output from an imaging section, the correction coefficient being a coefficient for correcting shading of the captured image, and a correction unit configured to perform shading correction on the captured image per fluorescence wavelength, based on the correction coefficient.

Brief Description of Drawings

[Fig. 1] Fig. 1 is a block diagram depicting an example of a configuration of an information processing system applicable to each embodiment of the present disclosure.
[Fig. 2] Fig. 2 is a schematic diagram depicting a configuration example of a microscope system applicable to each embodiment.
[Fig. 3] Fig. 3 is an example of a flowchart schematically depicting processing of the information processing system applicable to each embodiment of the present disclosure.
[Fig. 4] Fig. 4 is a block diagram depicting an example of a hardware configuration of an information processing apparatus applicable to each embodiment.
[Fig. 5] Fig. 5 is a functional block diagram for describing functions of the information processing system according to each embodiment of the present disclosure.

[Fig. 6] Fig. 6 is a schematic diagram depicting a configuration example of capturing data when an imaging section captures a pathology slide by a scan capturing method according to a first embodiment.

[Fig. 7] Fig. 7 is a schematic diagram depicting specific examples of fluorescence spectra captured by the imaging section and acquired by an image acquisition unit according to each embodiment.

[Fig. 8] Fig. 8 is a schematic diagram for describing generation of a linked fluorescence spectrum in the imaging section according to each embodiment.

[Fig. 9] Fig. 9 is a schematic diagram depicting an example of a WSI image when shading correction processing is not performed according to an existing technology.

[Fig. 10] Fig. 10 is a functional block diagram for describing functions of a shading correction unit according to the first embodiment.

[Fig. 11] Fig. 11 is an example of a flowchart depicting shading correction processing according to the first embodiment.

[Fig. 12] Fig. 12 is a schematic diagram for describing calculation processing of a shading correction coefficient according to the first embodiment.

[Fig. 13] Fig. 13 is a functional block diagram for describing functions of a shading correction unit according to a second embodiment.

[Fig. 14] Fig. 14 is an example of a flowchart depicting shading correction processing according to the second embodiment.

[Fig. 15] Fig. 15 is a schematic diagram for describing processing of selecting a block to be used for correction coefficient calculation and a region in which pixel values are to be used in the block according to the second embodiment.

[Fig. 16] Fig. 16 is a schematic diagram for describing calculation processing of a shading correction coefficient according to a third embodiment.

[Fig. 17] Fig. 17 is a schematic diagram depicting a configuration example of capturing data when the imaging section captures a pathology slide by a tile capturing method according to a fourth embodiment.

[Fig. 18] Fig. 18 is a schematic diagram for describing calculation processing of a shading correction coefficient according to the fourth embodiment.

Description of Embodiments

Hereinafter, embodiments of the present disclosure will be described in detail with reference to the drawings. In the following embodiments, the same components are denoted by the same reference signs, and redundant description thereof will be omitted.

Hereinafter, the embodiments of the present disclosure will be described in the following order.

1. Overview of Present Disclosure
2. Technology Applicable to Embodiments of Present Disclosure
3. Configuration according to Each Embodiment of Present Disclosure
4. First Embodiment of Present Disclosure
5. Second Embodiment of Present Disclosure
6. Third Embodiment of Present Disclosure
7. Fourth Embodiment of Present Disclosure

1. Overview of Present Disclosure

A system is known that captures a specimen fluorescently multi-stained with a plurality of fluorescent pigments having different emission wavelengths for each of the emission wavelengths of the fluorescent pigments while moving a capturing region, and combines the images captured in all the capturing regions, thereby acquiring whole slide imaging (WSI). In such a system, shading on a captured image may appear as artifacts in a periodic pattern. In addition, the relationship between wavelengths may change due to the shading, and it may be not possible to obtain a correct fluorescence image in color separation processing of separating a fluorescence spectrum and an autofluorescence spectrum.

Therefore, in the embodiments of the present disclosure, a correction coefficient in consideration of a difference for each wavelength or a temporal change is calculated from a captured image obtained by capturing a specimen, and the captured image is corrected using the calculated correction coefficient. This makes it possible to suppress shading and reduce artifacts caused by the shading.

2. Technology Applicable to Embodiments of Present Disclosure

First, a technology applicable to the embodiments of the present disclosure will be described.

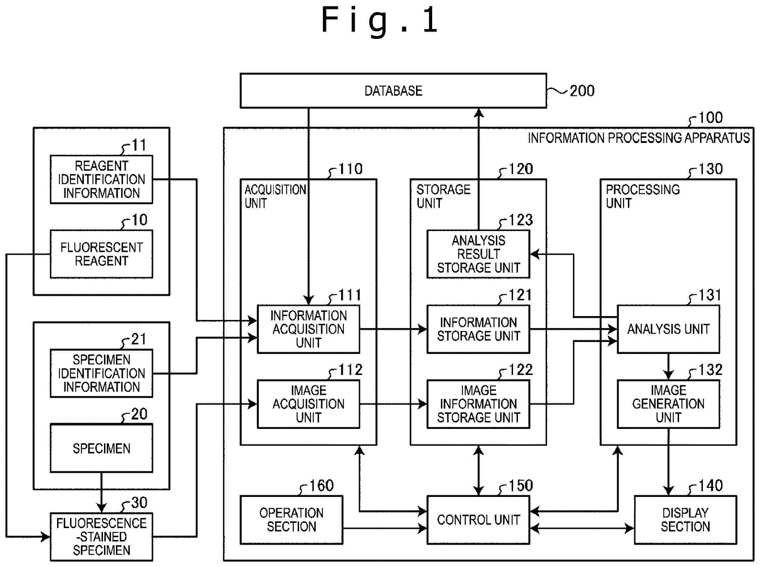

Fig. 1 is a block diagram depicting an example of a configuration of an information processing system applicable to each embodiment of the present disclosure. As depicted in Fig. 1, the information processing system applicable to each embodiment of the present disclosure includes an information processing apparatus 100 and a database 200, and a fluorescent reagent 10, a specimen 20, and a fluorescence-stained specimen 30 are present as inputs to the information processing system.

Fluorescent Reagent 10

The fluorescent reagent 10 is a chemical agent used for staining the specimen 20. Examples of the fluorescent reagent 10 include a fluorescent antibody (including a primary antibody used for direct labeling or a secondary antibody used for indirect labeling), a fluorescent probe, a nuclear staining reagent, and the like, but the type of fluorescent reagent 10 is not limited thereto. The fluorescent reagent 10 is managed with identification information (hereinafter referred to as "reagent identification information 11") that allows identification of the fluorescent reagent 10 (or a production lot of the fluorescent reagent 10).

The reagent identification information 11 is, for example, barcode information or the like (one-dimensional barcode information, two-dimensional barcode information, or the like), but is not limited thereto. Even when the same product is used, the property of the fluorescent reagent 10 varies for each production lot depending on the production method, the state of a cell from which an antibody is obtained, or the like. For example, the spectrum, quantum yield, fluorescent labeling ratio, or the like of the fluorescent reagent 10 is different for each production lot. Therefore, in the information processing system, the fluorescent reagent 10 is managed for each production lot by attaching the reagent identification information 11. Thus, the information processing apparatus 100 can perform fluorescence separation in consideration of a slight property difference that appears in each production lot.

Specimen 20

The specimen 20 is prepared from a biological specimen or a tissue sample collected from a human body for the purpose of pathological diagnosis or the like. The specimen 20 may be a tissue section, a cell, or a fine particle. Regarding the specimen 20, the type of used tissue (for example, organ or the like), the type of target disease, the attributes of a subject (for example, age, sex, blood type, race, or the like), or the lifestyle of the subject (for example, dietary habits, exercise habits, smoking habits, or the like) are not particularly limited. Examples of the tissue section can include a section before staining of a tissue section to be stained (hereinafter, also simply referred to as a section), a section adjacent to a stained section, a section different from a stained section in the same block (sampled from the same place as that of the stained section), a section in a different block in the same tissue (sampled from a different place from that of a stained section), and a section collected from a different patient.

The specimen 20 is managed with identification information (hereinafter referred to as "specimen identification information 21") that allows identification of the specimen 20. In the same manner as the reagent identification information 11, the specimen identification information 21 is, for example, barcode information or the like (one-dimensional barcode information, two-dimensional barcode information, or the like), but is not limited thereto. The property of the specimen 20 varies depending on the type of used tissue, the type of target disease, the attributes of a subject, the lifestyle of the subject, or the like. For example, the measurement channel, spectrum, or the like of the specimen 20 varies depending on the type of used tissue or the like. In the information processing system, the specimen 20 is individually managed by attaching the specimen identification information 21. This allows the information processing apparatus 100 to perform fluorescence separation in consideration of even a slight property difference that appears in each specimen 20.

Fluorescence-Stained Specimen 30

The fluorescence-stained specimen 30 is prepared by staining the specimen 20 with the fluorescent reagent 10. In the present embodiment, it is assumed that the fluorescence-stained specimen 30 is obtained by staining the specimen 20 with at least one fluorescent reagent 10, but the number of fluorescent reagents 10 used for staining is not particularly limited. A staining method is determined based on a combination of the specimen 20 and the fluorescent reagent 10 but is not particularly limited. The fluorescence-stained specimen 30 is input to the information processing apparatus 100 and imaged.

Information Processing Apparatus 100

As depicted in Fig. 1, the information processing apparatus 100 includes an acquisition unit 110, a storage unit 120, a processing unit 130, a display section 140, a control unit 150, and an operation section 160. The information processing apparatus 100 can be, for example, a fluorescence microscope or the like, but is not necessarily limited thereto and may include various apparatuses. For example, the information processing apparatus 100 may be a personal computer (PC) or the like.

Acquisition Unit 110

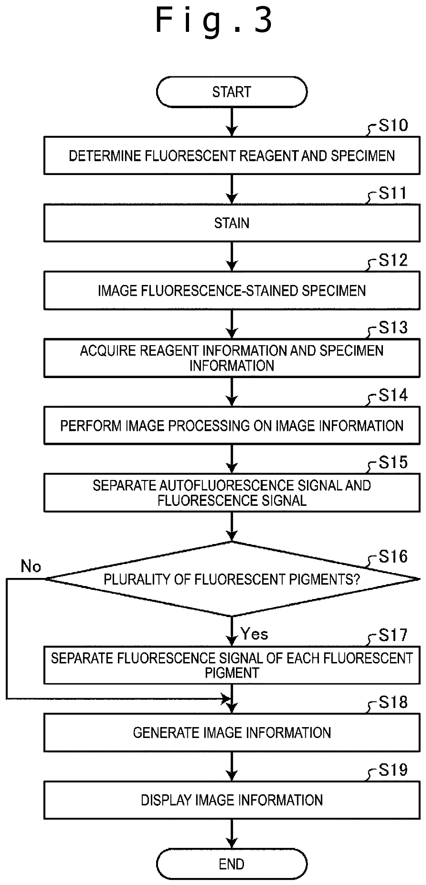

The acquisition unit 110 is configured to acquire information to be used for various types of processing of the information processing apparatus 100. As depicted in Fig. 3, the acquisition unit 110 includes an information acquisition unit 111 and an image acquisition unit 112.

Information Acquisition Unit 111

The information acquisition unit 111 is configured to acquire reagent information and specimen information. More specifically, the information acquisition unit 111 acquires the reagent identification information 11 attached to the fluorescent reagent 10 used for generating the fluorescence-stained specimen 30 and the specimen identification information 21 attached to the specimen 20. For example, the information acquisition unit 111 acquires the reagent identification information 11 and the specimen identification information 21 using a barcode reader or the like. The information acquisition unit 111 acquires, from the database 200, the reagent information based on the reagent identification information 11 and the specimen information based on the specimen identification information 21. The information acquisition unit 111 stores the acquired information in the information storage unit 121 described below.

Image Acquisition Unit 112

The image acquisition unit 112 is configured to acquire image information obtained from a plurality of fluorescence signals corresponding to a plurality of excitation light beams having different wavelengths when the fluorescence-stained specimen 30 (which is prepared by staining the specimen 20 with the fluorescent reagent 10) is irradiated with the plurality of excitation light beams. More specifically, the image acquisition unit 112 receives light beams and outputs detection signals corresponding to the amounts of the received light beams, thereby acquiring fluorescence spectra of the fluorescence-stained specimen 30, based on the detection signals. Here, the contents of the excitation light (including the excitation wavelength, the intensity, and the like) are determined based on the reagent information and the like (in other words, information on the fluorescent reagent 10 and the like). The fluorescence signal here is not particularly limited as long as it is a signal derived from fluorescence, and may be, for example, a fluorescence spectrum. The image acquisition unit 112 stores the image information in an image information storage unit 122 described below.

Storage Unit 120

The storage unit 120 is configured to store (retain) information to be used for various types of processing of the information processing apparatus 100 or information output by various types of processing. As depicted in Fig. 1, the storage unit 120 includes the information storage unit 121, the image information storage unit 122, and an analysis result storage unit 123.

Information Storage Unit 121

The information storage unit 121 is configured to store the reagent information and the specimen information acquired by the information acquisition unit 111. After completion of analysis processing by an analysis unit 131 and generation processing of the image information (reconstruction processing of the image information) by an image generation unit 132, which will be described below, the information storage unit 121 may free up storage space by deleting the reagent information and the specimen information used for the processing.

Image Information Storage Unit 122

The image information storage unit 122 is configured to store the image information of the fluorescence-stained specimen 30 acquired by the image acquisition unit 112. In a manner similar to the information storage unit 121, after completion of the analysis processing by the analysis unit 131 and the generation processing of the image information (reconstruction processing of the image information) by the image generation unit 132, the image information storage unit 122 may free up storage space by deleting the image information used for the processing.

Analysis Result Storage Unit 123

The analysis result storage unit 123 is configured to store the result of the analysis processing performed by the analysis unit 131 described below. For example, the analysis result storage unit 123 stores the fluorescence signal of the fluorescent reagent or the autofluorescence signal of the specimen 20 separated by the analysis unit 131. The analysis result storage unit 123 separately provides the result of the analysis processing to the database 200 in order to improve the analysis accuracy by machine learning or the like. After providing the result of the analysis processing to the database 200, the analysis result storage unit 123 may free up storage space by appropriately deleting the result of the analysis processing stored in the analysis result storage unit 123.

Processing Unit 130

The processing unit 130 has a functional configuration of performing various types of processing using the image information, the reagent information, and the specimen information. As depicted in Fig. 3, the processing unit 130 includes the analysis unit 131 and the image generation unit 132.

Analysis Unit 131

The analysis unit 131 is configured to perform various types of analysis processing using the image information, the specimen information, and the reagent information. For example, the analysis unit 131 may perform linking processing of generating a linked fluorescence spectrum by linking, in the wavelength direction, at least some of the plurality of fluorescence spectra acquired by the image acquisition unit 112. The analysis unit 131 may perform color separation processing of separating, based on the specimen information and the reagent information, the autofluorescence signal of the specimen 20 and the fluorescence signal of the fluorescent reagent 10 from, for example, the image information obtained from the linked fluorescence spectrum.

More specifically, the analysis unit 131 recognizes one or more elements constituting the autofluorescence signal based on the measurement channel included in the specimen information. For example, the analysis unit 131 recognizes one or more autofluorescence components constituting the autofluorescence signal. Then, the analysis unit 131 predicts the autofluorescence signal included in the image information using the spectrum information of the one or more autofluorescence components included in the specimen information. Then, the analysis unit 131 separates the autofluorescence signal and the fluorescence signal from the image information, based on the spectrum information of the fluorescence component of the fluorescent reagent 10 included in the reagent information and the predicted autofluorescence signal.

Here, when the specimen 20 is stained with two or more fluorescent reagents 10, the analysis unit 131 separates the fluorescence signal of each of the two or more fluorescent reagents 10 from the image information (or the fluorescence signal after separation from the autofluorescence signal) based on the specimen information and the reagent information. For example, the analysis unit 131 separates the fluorescence signal of each fluorescent reagent 10 from the entire fluorescence signal after separation from the autofluorescence signal, using the spectrum information of the fluorescence component of each fluorescent reagent 10 included in the reagent information.

In addition, when the autofluorescence signal includes two or more autofluorescence components, the analysis unit 131 separates the autofluorescence signal of each autofluorescence component from the image information (or the autofluorescence signal after separation from the fluorescence signal) based on the specimen information and the reagent information. For example, the analysis unit 131 separates the autofluorescence signal of each autofluorescence component from the entire autofluorescence signal after separation from the fluorescence signal, using the spectrum information of each autofluorescence component included in the specimen information.

The analysis unit 131 that has separated the fluorescence signal and the autofluorescence signal performs various types of processing using these signals.

For example, the analysis unit 131 may extract a fluorescence signal from image information of another specimen 20 by performing subtraction processing (also referred to as "background subtraction processing") on the image information of the other specimen 20 using the autofluorescence signal after the separation. When there are a plurality of specimens 20 that are the same or similar in terms of a tissue used for the specimens 20, the type of target disease, the attributes of a subject, the lifestyle of the subject, and the like, there is a high possibility that the autofluorescence signals of these specimens 20 are similar. Examples of the similar specimens here include a tissue section before staining of a tissue section to be stained (hereinafter, section), a section adjacent to a stained section, a section different from a stained section in the same block (sampled from the same place as that of the stained section), a section in a different block (sampled from a different place from that of a stained section) in the same tissue, and a section collected from a different patient.

Therefore, when an autofluorescence signal can be extracted from a certain specimen 20, the analysis unit 131 may extract a fluorescence signal from image information of another specimen 20 by removing the autofluorescence signal from the image information of the other specimen 20. In addition, when calculating an S/N value using the image information of the other specimen 20, the analysis unit 131 can improve the S/N value by using a background after the autofluorescence signal is removed.

In addition to the background subtraction processing, the analysis unit 131 can perform various types of processing using the fluorescence signal or the autofluorescence signal after the separation. For example, the analysis unit 131 can analyze the fixation state of the specimen 20 using these signals, or can perform segmentation (or region division) for recognizing a region of an object (for example, cell, intracellular structure (cytoplasm, cell membrane, nucleus, or the like) or tissue (tumor part, non-tumor part, connective tissue, blood vessel, blood vessel wall, lymphatic vessel, fibrosis structure, necrotic tissue, or the like)) included in the image information. The analysis of the fixation state of the specimen 20 and the segmentation will be described in detail below.

Image Generation Unit 132

The image generation unit 132 is configured to generate (reconfigure) image information, based on the fluorescence signal or the autofluorescence signal separated by the analysis unit 131. For example, the image generation unit 132 can generate image information including only the fluorescence signal or image information including only the autofluorescence signal. At this time, when the fluorescence signal includes a plurality of fluorescence components or the autofluorescence signal includes a plurality of autofluorescence components, the image generation unit 132 can generate image information for each component.

In addition, when the analysis unit 131 performs various types of processing (for example, analysis of the fixation state of the specimen 20, segmentation, calculation of an S/N value, or the like) using the fluorescence signal or the autofluorescence signal after the separation, the image generation unit 132 may generate image information indicating the processing results thereof. According to this configuration, it is possible to visualize distribution information on the fluorescent reagent 10 labeled on the target molecule or the like, that is, the two-dimensional spread, intensity, and wavelength of the fluorescence, and the positional relationships thereof, and to improve visibility for a doctor or a researcher, who is a user, particularly in a tissue image analysis field where information on the target substance is complicated.

The image generation unit 132 may perform control to distinguish the fluorescence signal from the autofluorescence signal based on the fluorescence signal or the autofluorescence signal separated by the analysis unit 131, and generate image information. Specifically, the image information may be generated by performing control of, for example, improving the luminance of the fluorescence spectrum of the fluorescent reagent 10 labeled on the target molecule or the like, extracting and discoloring only the fluorescence spectrum of the labeled fluorescent reagent 10, extracting the fluorescence spectra of two or more fluorescent reagents 10 from the specimen 20 labeled with the two or more fluorescent reagents 10 and discoloring each of the fluorescence spectra to a different color, extracting only the autofluorescence spectrum of the specimen 20 and performing division or subtraction, or improving a dynamic range. Thus, the user can clearly distinguish color information derived from the fluorescent reagent bound to the target substance, and visibility for the user can be improved.

Display Section 140

The display section 140 is configured to present the image information generated by the image generation unit 132 to the user by displaying the image information on a display. Note that the type of display used as the display section 140 is not particularly limited. Although not described in detail in the present embodiment, the image information generated by the image generation unit 132 may be presented to the user by being projected by a projector or printed by a printer (in other words, a method of outputting the image information is not particularly limited).

Control Unit 150

The control unit 150 has a functional configuration that comprehensively controls the overall processing performed by the information processing apparatus 100. For example, the control unit 150 controls the start, end, and the like of various types of processing (for example, imaging processing of the fluorescence-stained specimen 30, analysis processing, generation processing of the image information (reconstruction processing of the image information), display processing of the image information, and the like) as described above, based on an operation input performed by the user via the operation section 160. The control contents of the control unit 150 are not particularly limited. For example, the control unit 150 may control processing (for example, processing related to an operating system (OS)) generally performed in a general-purpose computer, a PC, a tablet PC, or the like.

Operation Section 160

The operation section 160 is configured to receive an operation input from the user. More specifically, the operation section 160 includes various types of input means such as a keyboard, a mouse, a button, a touch panel, or a microphone, and the user can perform various inputs to the information processing apparatus 100 by operating the input means. Information related to the operation input performed via the operation section 160 is provided to the control unit 150.

Database 200

The database 200 is an apparatus that manages the specimen information, the reagent information, and the result of the analysis processing. More specifically, the database 200 manages the specimen identification information 21 and the specimen information in association with each other, and the reagent identification information 11 and the reagent information in association with each other. Accordingly, the information acquisition unit 111 can acquire, from the database 200, the specimen information, based on the specimen identification information 21 of the specimen 20 which is a measurement target, and the reagent information, based on the reagent identification information 11 of the fluorescent reagent 10.
The specimen information managed by the database 200 is information including the measurement channel and the spectrum information specific to the autofluorescence component of the specimen 20 as described above. However, in addition thereto, the specimen information may include target information about each specimen 20, specifically, information about the type of used tissue (for example, organ, cell, blood, body fluid, ascites, pleural effusion, or the like), the type of target disease, the attributes of the subject (for example, age, sex, blood type, race, or the like), or the lifestyle of the subject (for example, dietary habits, exercise habits, smoking habits, or the like). The information including the measurement channel and the spectrum information specific to the autofluorescence component included in the specimen 20 and the target information may be associated with each specimen 20.
Accordingly, it is possible to easily trace, from the target information, the information including the measurement channel and the spectrum information specific to the autofluorescence component included in the specimen 20, and, for example, it is possible to cause the analysis unit to execute similar separation processing performed in the past based on the similarity between pieces of target information of a plurality of specimens 20, and to shorten a measurement time. The "used tissue" is not particularly limited to a tissue collected from a target, and may include a living body tissue and a cell line of a human, an animal, or the like, and a solution, a solvent, a solute, and a material contained in a measurement target.
The reagent information managed by the database 200 is information including the spectrum information of the fluorescent reagent 10 as described above. However, in addition thereto, the reagent information may include information on the fluorescent reagent 10 such as a production lot, a fluorescence component, an antibody, a clone, a fluorescence labeling rate, a quantum yield, a fading coefficient (information indicating the ease of reducing the fluorescence intensity of the fluorescent reagent 10), and an absorption cross section (or a molar absorption coefficient). Further, the specimen information and the reagent information managed by the database 200 may be managed in different components, and in particular, the information on the reagent may be a reagent database that presents an optimal combination of reagents to the user.
Here, it is assumed that the specimen information and the reagent information are provided from a manufacturer (maker) or the like, or independently measured in the information processing system applicable to the present disclosure. For example, the manufacturer of the fluorescent reagent 10 often does not measure or provide the spectrum information, the fluorescence labeling rate, or the like for each production lot. Therefore, by independently measuring and managing these pieces of information in the information processing system according to the present disclosure, it is possible to improve the accuracy of separation between the fluorescence signal and the autofluorescence signal.
In addition, for simplification of management, the database 200 may use catalog values made public by the manufacturer (maker) or the like, document values described in various documents, or the like, as the specimen information and the reagent information (in particular, the reagent information). However, in general, since actual specimen information and reagent information are often different from the catalog values and document values, it is more preferable that the specimen information and the reagent information be independently measured and managed in the information processing system according to the present disclosure as described above.
Further, the accuracy of the analysis processing (for example, the separation processing of the fluorescence signal and the autofluorescence signal, or the like) can be improved by a machine learning technology using the specimen information, the reagent information, and the result of the analysis processing managed in the database 200. An entity that performs learning using the machine learning technology or the like is not particularly limited. Here, a case where the analysis unit 131 of the information processing apparatus 100 performs learning will be described as an example. For example, the analysis unit 131 produces, using a neural network, a classifier or an estimator trained by machine learning using training data in which the fluorescence signal and the autofluorescence signal after separation are associated with the image information, the specimen information, and the reagent information used for the separation. When the image information, the specimen information, and the reagent information are newly acquired, the analysis unit 131 can input these pieces of information to the classifier or the estimator, thereby predicting and outputting the fluorescence signal and the autofluorescence signal included in the image information.

In addition, similar separation processing (separation processing using similar image information, specimen information, or reagent information) performed in the past with higher accuracy than that of the predicted fluorescence signal and autofluorescence signal may be calculated, the processing contents in the processing (information, parameter, and the like used in the processing) may be statistically or recursively analyzed, and a method of improving the separation processing of the fluorescence signal and the autofluorescence signal based on the analysis result may be output. The method of machine learning is not limited to the above, and a known machine learning technology can be used. The separation processing of the fluorescence signal and the autofluorescence signal may be performed by artificial intelligence. Not only the separation processing of the fluorescence signal and the autofluorescence signal, but also various types of processing (for example, analysis of the fixation state of the specimen 20, segmentation, or the like) using the fluorescence signal or autofluorescence signal after separation may be improved by the machine learning technology or the like.

The configuration example of the information processing system applicable to the present embodiment has been described above. Note that the configuration described with reference to Fig. 1 is a mere example, and the configuration of the information processing system applicable to the embodiment is not limited to such an example. For example, the information processing apparatus 100 does not necessarily need to include all the functional configurations depicted in Fig. 1. The information processing apparatus 100 may include the database 200 therein. The functional configuration of the information processing apparatus 100 can be flexibly modified according to the specification and operation.

The configuration example of the information processing system applicable to each embodiment of the present disclosure has been described above. Note that the configuration described above with reference to Fig. 1 is a mere example, and the configuration of the information processing system according to the present embodiment is not limited to such an example. For example, the information processing apparatus 100 does not necessarily need to include all the components depicted in Fig. 1, and may include components not depicted in Fig. 1.

Here, the information processing system applicable to each embodiment of the present disclosure may include an imaging apparatus (including, for example, a scanner or the like) that acquires a fluorescence spectrum, and an information processing apparatus that performs processing using the fluorescence spectrum. In this case, the image acquisition unit 112 depicted in Fig. 1 can be implemented by the imaging apparatus, and the other components can be implemented by the information processing apparatus.

In addition, the information processing system applicable to each embodiment of the present disclosure may include an imaging apparatus that acquires a fluorescence spectrum and software used for processing of using the fluorescence spectrum. In other words, the information processing system does not need to include a physical component (for example, a memory, a processor, or the like) that stores or executes the software. In this case, the image acquisition unit 112 depicted in Fig. 1 can be implemented by the imaging apparatus, and the other components can be implemented by the information processing apparatus on which the software is executed.

The software is provided to the information processing apparatus via a network (for example, from a website, a cloud server, or the like) or via any storage medium (for example, a disk or the like).

The information processing apparatus on which the software is executed can be various types of servers (for example, a cloud server or the like), a general-purpose computer, a PC, a tablet PC, or the like. Note that a method of providing the software to the information processing apparatus and the type of information processing apparatus are not limited to the above. In addition, it should be noted that the configuration of the information processing system according to the present embodiment is not necessarily limited to the above, and a configuration that can be conceived of by a person skilled in the art based on the technical level at the time of use can be applied.

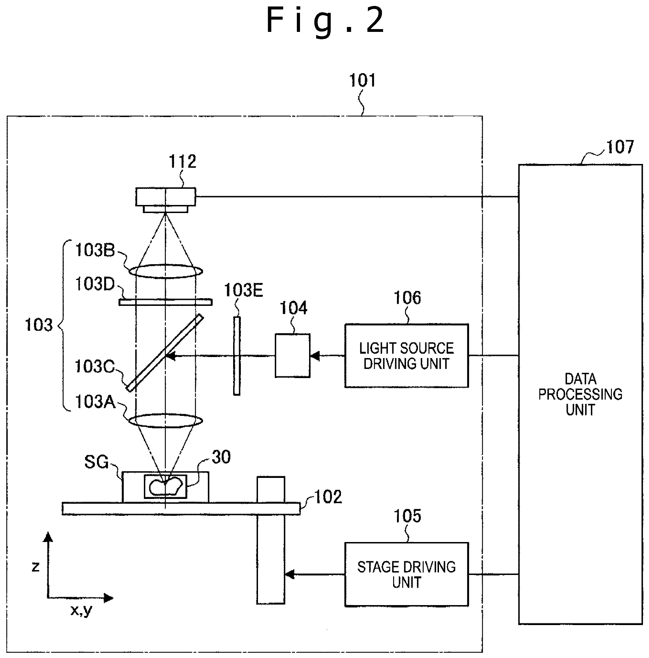

The information processing system described with reference to Fig. 1 may be implemented as, for example, a microscope system. Accordingly, a configuration example of the microscope system when the information processing system applicable to each embodiment is implemented as the microscope system will be described. Fig. 2 is a schematic diagram depicting a configuration example of the microscope system applicable to each embodiment.

As depicted in Fig. 2, the microscope system applicable to each embodiment includes a microscope 101 and a data processing unit 107.

The microscope 101 includes a stage 102, an optical system 103, a light source 104, a stage driving unit 105, a light source driving unit 106, and the image acquisition unit 112 (not illustrated).

The stage 102 has a mounting surface on which the fluorescence-stained specimen 30 can be mounted, and is movable in a parallel direction (x-y plane direction) and a perpendicular direction (z-axis direction) with respect to the mounting surface by driving the stage driving unit 105. The fluorescence-stained specimen 30 has a thickness of, for example, several $\mu$m to several tens of $\mu$m in the Z direction, and is fixed by a predetermined fixing method while being sandwiched between a slide glass SG and a cover glass (not illustrated).

The optical system 103 is disposed above the stage 102. The optical system 103 includes an objective lens 103A, an image formation lens 103B, a dichroic mirror 103C, an emission filter 103D, and an excitation filter 103E. The light source 104 is, for example, an electric bulb such as a mercury lamp, a light emitting diode (LED), or the like, and irradiates a fluorescent label attached to the fluorescence-stained specimen 30 with excitation light by driving the light source driving unit 106.

When a fluorescence image of the fluorescence-stained specimen 30 is obtained, the excitation filter 103E generates excitation light by causing, among light beams emitted from the light source 104, only a light beam having an excitation wavelength for exciting a fluorescent pigment to pass therethrough. The dichroic mirror 103C reflects the excitation light that has passed through the excitation filter and that is incident thereon, and guides the excitation light to the objective lens 103A. The objective lens 103A condenses the excitation light on the fluorescence-stained specimen 30. The objective lens 103A and the image formation lens 103B magnify an image of the fluorescence-stained specimen 30 by a predetermined magnification, and form the magnified image on an imaging surface of the image acquisition unit 112.

When the fluorescence-stained specimen 30 is irradiated with the excitation light, a staining agent bound to each tissue of the fluorescence-stained specimen 30 emits fluorescence. The fluorescence passes through the dichroic mirror 103C via the objective lens 103A, and reaches the image formation lens 103B via the emission filter 103D. The emission filter 103D absorbs the light that has been magnified by the objective lens 103A and that has passed through the excitation filter 103E, and causes only part of the emitted light to pass therethrough. The image of the emitted light from which the external light has been lost is magnified by the image formation lens 103B and formed on the image acquisition unit 112 as described above.

The data processing unit 107 is configured to drive the light source 104, acquire the fluorescence image of the fluorescence-stained specimen 30 using the image acquisition unit 112, and perform various types of processing using the fluorescence image. More specifically, the data processing unit 107 can function as some or all components of the information acquisition unit 111, the storage unit 120, the processing unit 130, the display section 140, the control unit 150, the operation section 160, and the database 200 of the information processing apparatus 100 described with reference to Fig. 1. For example, the data processing unit 107 may function as the control unit 150 of the information processing apparatus 100 to control the driving of the stage driving unit 105 and the light source driving unit 106 and to control the acquisition of a spectrum by the image acquisition unit 112. The data processing unit 107 may function as the processing unit 130 of the information processing apparatus 100 to perform generation processing of a linked fluorescence spectrum, processing of separating the linked fluorescence spectrum for each molecule, generation of image information based on the separation result, and the like.

The configuration example of the microscope system when the information processing system applicable to each embodiment of the present disclosure is implemented as the microscope system has been described above. Note that the configuration described above with reference to Fig. 2 is a mere example, and the configuration of the microscope system applicable to each embodiment of the present disclosure is not limited to such an example. For example, the microscope system does not necessarily need to include all of the components depicted in Fig. 2, and may include components not depicted in Fig. 2.

Processing Flow Example

Fig. 3 is an example of a flowchart schematically depicting processing of the information processing system applicable to each embodiment of the present disclosure.

In step S10, the user determines the fluorescent reagent 10 and the specimen 20 to be used for analysis. In step S11, the user stains the specimen 20 with the fluorescent reagent 10 to prepare the fluorescence-stained specimen 30.

In step S12, the information processing apparatus 100 causes the image acquisition unit 112 to image the fluorescence-stained specimen 30, thereby acquiring image information. In step S13, the information processing apparatus 100 causes the information acquisition unit 111 to acquire reagent information and specimen information from the database 200, based on the reagent identification information 11 attached to the fluorescent reagent 10 used for generating the fluorescence-stained specimen 30 and the specimen identification information 21 attached to the specimen 20.

In step S14, the information processing apparatus 100 causes the analysis unit 131 to execute predetermined image processing on the image information acquired in step S12.

In step S15, the information processing apparatus 100 causes the analysis unit 131 to separate the autofluorescence signal of the specimen and the fluorescence signal of the fluorescent reagent 10 from the image information based on the specimen information and the reagent information. When the fluorescence signal includes signals of a plurality of fluorescent pigments ("Yes" in step S16), the processing proceeds to step S17.

In step S17, the information processing apparatus 100 causes the analysis unit 131 to separate the fluorescence signal of each fluorescent pigment, and causes the processing to proceed to step S18. On the other hand, when the fluorescence signal does not include signals of a plurality of fluorescent pigments ("No" in step S16), the separation processing of step S17 is skipped, and the processing proceeds to step S18.

In step S18, the information processing apparatus 100 causes the image generation unit 132 to generate image information using the fluorescence signal separated by the analysis unit 131. In step S18, the image generation unit 132 may generate, for example, image information from which the autofluorescence signal is removed, or image information in which the fluorescence signal is displayed for each fluorescent pigment. In step S19, the information processing apparatus 100 causes the display section 140 to display the image information generated by the image generation unit 132. After the processing of step S19, a series of processing operations according to the flowchart of Fig. 3 is completed.

The processing operations of the respective steps in the flowchart of Fig. 3 do not necessarily need to be performed chronologically in the described order. That is, the processing operations of the respective steps in the flowchart may be performed in an order different from the described order, or may be performed in parallel.

For example, in the above description, the analysis unit 131 separates the autofluorescence signal of the specimen and the fluorescence signal of the fluorescent reagent 10 from the image information in step S15, and then separates the fluorescence signal of each fluorescent pigment in step S17, but the present disclosure is not limited to this example. For example, the analysis unit 131 may directly separate the fluorescence signal of each fluorescent pigment from the image information, or may separate the autofluorescence signal of the specimen from the image information after separating the fluorescence signal of each fluorescent pigment from the image information.

The information processing apparatus 100 may execute processing not depicted in the flowchart of Fig. 3 together with the processing in the flowchart. For example, the analysis unit 131 may not only separate the signals, but also perform segmentation or analyze the fixation state of the specimen 20, based on the separated fluorescence signal or autofluorescence signal.

Hardware Configuration

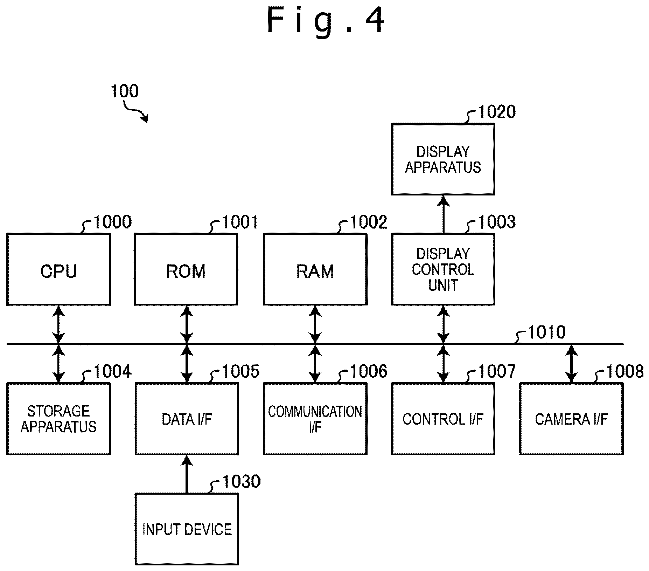

Fig. 4 is a block diagram depicting an example of a hardware configuration of the information processing apparatus 100 applicable to each embodiment.

In Fig. 4, the information processing apparatus 100 includes a CPU 1000, a read only memory (ROM) 1001, a random access memory (RAM) 1002, a display control unit 1003, a storage apparatus 1004, a data I/F 1005, a communication I/F 1006, a control I/F 1007, and a camera I/F 1008. These components are communicably connected to each other via a bus 1010.

The storage apparatus 1004 is a nonvolatile storage medium such as a hard disk drive or a flash memory. The CPU 1000 operates, using the RAM 1002 as a work memory, according to programs stored in the ROM 1001 and the storage apparatus 1004, and controls the operation of the information processing apparatus 100.

The display control unit 1003 generates a display signal that can be handled by a display apparatus 1020, based on display control information generated by the CPU 1000 according to a program. The display control unit 1003 outputs the generated display signal to the display apparatus 1020. The display apparatus 1020 includes a display device such as a liquid crystal display (LCD) or an organic electroluminescence (EL) display, and a drive circuit that drives the display device. The display apparatus 1020 displays a screen on the display device in accordance with the display signal supplied from the display control unit 1003. The display control unit 1003 and the display apparatus 1020 may correspond to the display section 140 described above.

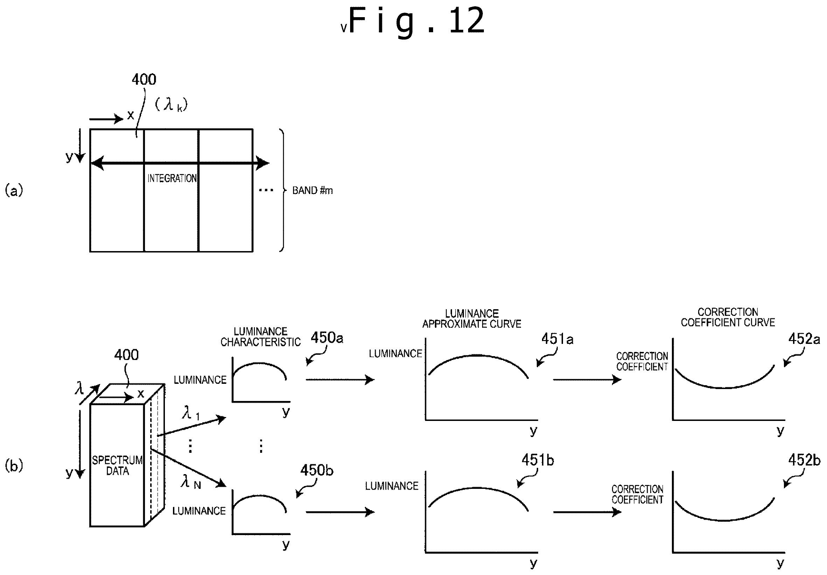

The data I/F 1005 is an interface for transmitting and receiving data to and from an external device. An interface applicable as the data I/F 1005 is not particularly limited, but an interface via wired communication such as a universal serial bus (USB) or wireless communication such as Bluetooth (trade name) may be used. In the example of Fig. 12, an input device 1030 such as a keyboard or a touch panel for a user to input an operation is connected to the data I/F 1005. The input device 1030 may correspond to the operation section 160 described above.

The communication I/F 1006 is an interface for communicating with a communication network such as the Internet or a local area network (LAN).

The control I/F 1007 is an interface for controlling an external device, and may be, for example, an interface for the stage driving unit 105 and the light source driving unit 106 depicted in Fig. 2. The camera I/F 1008 may be an interface for the image acquisition unit 112 described above, for example.

In the information processing apparatus 100, the CPU 1000 executes an information processing program according to each embodiment, thereby configuring the above-described acquisition unit 110, storage unit 120, processing unit 130, and control unit 150 as, for example, modules in a main storage area of the RAM 1002.

The information processing program can be acquired from the outside via a communication network (not illustrated) through communication via, for example, the communication I/F 1006, and installed on the information processing apparatus 100. The present disclosure is not limited thereto, and the program may be provided by being stored in a removable storage medium such as a compact disk (CD), a digital versatile disk (DVD), or a universal serial bus (USB) memory.

3. Configuration according to Each Embodiment of Present Disclosure

Next, a configuration according to each embodiment of the present disclosure will be described.

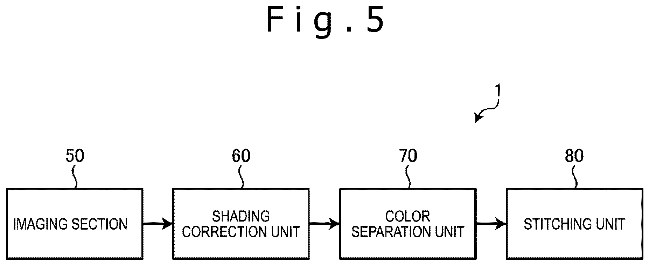

Fig. 5 is a functional block diagram for describing functions of the information processing system according to each embodiment of the present disclosure. In Fig. 5, an information processing system 1 according to each embodiment includes an imaging section 50, a shading correction unit 60, a color separation unit 70, and a stitching unit 80.

Among these components, the imaging section 50 may be included in the function of the image acquisition unit 112 depicted in Fig. 1. The shading correction unit 60 and the color separation unit 70 may be included in the function of the analysis unit 131 depicted in Fig. 1. The stitching unit 80 may be included in the function of the image generation unit 132 depicted in Fig. 1.

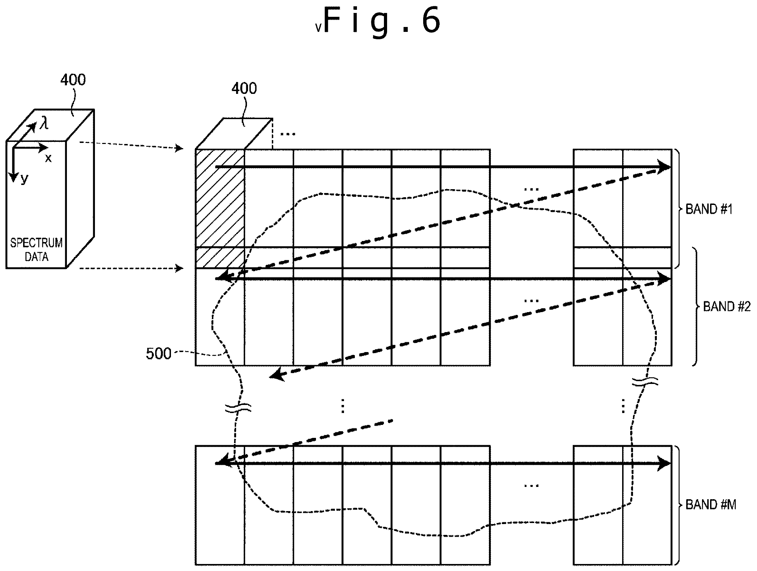

The imaging section 50 captures a pathology slide fluorescently multi-stained, and acquires spectrum data based on the capturing data. Fig. 6 is a schematic diagram depicting a configuration example of capturing data when the imaging section 50 captures a pathology slide by a scan capturing method according to a first embodiment.

In the example of Fig. 6, the imaging section 50 scans the pathology slide in the x direction, and performs capturing while shifting the capturing position in the x direction at predetermined intervals. After performing capturing a predetermined number of times in the x direction, the imaging section 50 changes the capturing position by a predetermined distance in the y direction, and then scans the pathology slide in the x direction again to perform capturing. A band #1, a band #2, ..., and a band #M are formed of respective pieces of capturing data captured by the scanning along the x direction. At this time, it is preferable that the scanning of the capturing position be performed so that an observation target 500 (for example, a tissue section) is included in the band #1 to the band #M.

As depicted in Fig. 6, the capturing data is stored in, for example, the image information storage unit 122 (see Fig. 1) as spectrum data 400 defined by x-y coordinates and a wavelength $\lambda$ for each block divided by a predetermined length corresponding to the capturing interval in the scanning direction. As an example, the imaging section 50 may shoot a video while shifting the shooting position, and each frame image in the video shooting may correspond to a block. In addition, since the blocks are combined by the stitching unit 80 in the subsequent stage, the bands are captured with partial overlap.

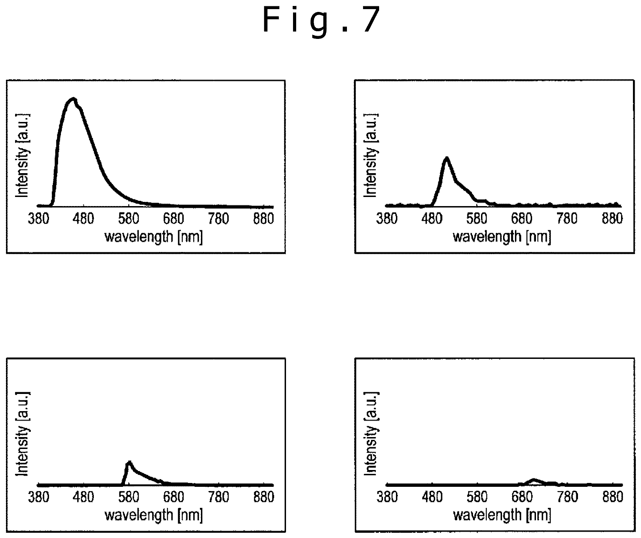

Fig. 7 is a schematic diagram depicting specific examples of fluorescence spectra captured by the imaging section 50 and acquired by the image acquisition unit 112 according to each embodiment. Sections (a) to (d) of Fig. 2 show the specific examples of the fluorescence spectra acquired when the fluorescence-stained specimen 30 contains four types of fluorescent substances, namely, DAPI, CK/AF488, PgR/AF594, and ER/AF647 and is irradiated with excitation light beams having, as respective excitation wavelengths, wavelengths of 392 nm (Section (a) of Fig. 2), 470 nm (Section (b) of Fig. 2), 549 nm (Section (c) of Fig. 2), and 628 nm (Section (d) of Fig. 2).

Note that the fluorescence wavelengths are shifted to a long wavelength side as compared with the excitation wavelengths due to the release of energy for fluorescence emission (Stokes shift). The fluorescent substances contained in the fluorescence-stained specimen 30 and the excitation wavelengths of the emitted excitation light beams are not limited to the above. The imaging section 50 (image acquisition unit 112) stores the acquired fluorescence spectra in the image information storage unit 122 described below.

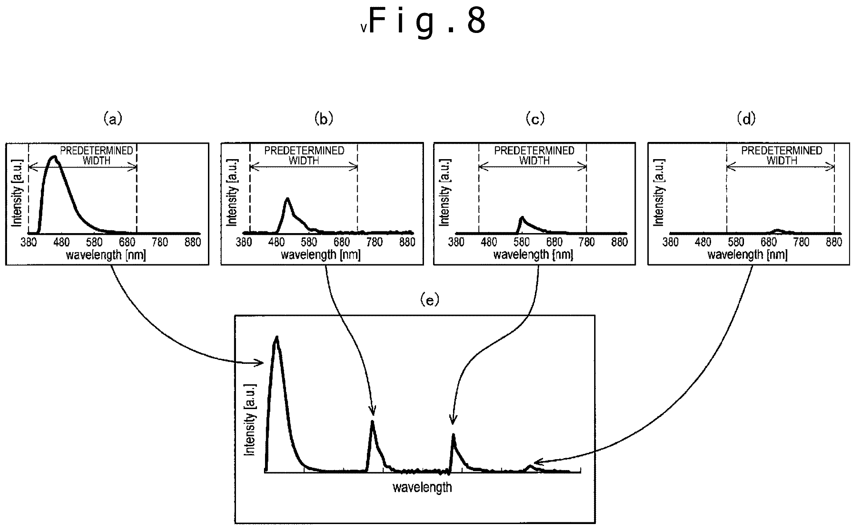

The imaging section 50 (image acquisition unit 112) further generates a linked fluorescence spectrum by linking, in the wavelength direction, at least some of the plurality of acquired fluorescence spectra. Fig. 8 is a schematic diagram for describing generation of the linked fluorescence spectrum in the imaging section 50 according to each embodiment. It is not limited that the linked fluorescence spectrum is generated by the imaging section 50, and the linked fluorescence spectrum may be generated by, for example, the analysis unit 131.

For example, as shown in Sections (a) to (d) of the figure, the imaging section 50 extracts data having a predetermined width from each of the four fluorescence spectra acquired by the image acquisition unit 112 as described above so as to include the maximum value of the fluorescence intensity of each fluorescence spectrum.

The width of the wavelength band from which the imaging section 50 extracts the data can be determined based on the reagent information, the excitation wavelength, the fluorescence wavelength, or the like, and may be different for each fluorescent substance. In other words, the width of the wavelength band from which the analysis unit 131 extracts the data may be different for each of the fluorescence spectra shown in Sections (a) to (d) of Fig. 8.

Then, as shown in Section (e) of Fig. 8, the imaging section 50 links the extracted pieces of data to each other in the wavelength direction to generate one linked fluorescence spectrum. Note that since the linked fluorescence spectrum includes the pieces of data extracted from the plurality of fluorescence spectra, the wavelength is not continuous at the boundaries of the respective pieces of linked data.

At this time, the imaging section 50 performs the above linking after making uniform the intensities of the excitation light beams corresponding to the plurality of fluorescence spectra (in other words, after correcting the plurality of fluorescence spectra) based on the intensities of the excitation light beams. More specifically, the imaging section 50 divides the fluorescence spectra by the respective excitation power densities, which are the intensities of the excitation light beams, to perform the above-described linking after making uniform the intensities of the excitation light beams corresponding to the plurality of fluorescence spectra. Thus, the fluorescence spectra when the excitation light beams having the same intensity are emitted are obtained. In addition, when the emitted excitation light beams have different intensities, spectra absorbed by the fluorescence-stained specimen 30 (hereinafter, referred to as "absorption spectra") also have different intensities depending on the intensities of the excitation light beams. Therefore, as described above, by making uniform the intensities of the excitation light beams corresponding respectively to the plurality of fluorescence spectra, the absorption spectra can be appropriately evaluated.

Returning to Fig. 5, the shading correction unit 60 performs shading correction processing according to each embodiment of the present disclosure on each piece of the spectrum data 400 to generate corrected spectrum data. The shading correction processing by the shading correction unit 60 will be described in detail below.

The color separation unit 70 performs color separation processing based on a standard spectrum to generate a plurality of fluorescent marker images from each piece of the corrected spectrum data that has been subjected to the shading correction processing by the shading correction unit 60.

For example, the color separation unit 70 performs color separation processing on the linked fluorescence spectrum of the stained sample input from the imaging section 50 using a linked fluorescence reference spectrum included in the reagent information and a linked autofluorescence reference spectrum included in the specimen information, which are input from the information storage unit 121, thereby separating the linked fluorescence spectrum into spectra of respective molecules. Note that, for example, the least squares method (LSM), the weighted least squares method (WLSM), or the like may be used for the color separation processing.

The stitching unit 80 combines the images of all the blocks for each fluorescent marker to generate one WSI image.

Concerning Existing Technology

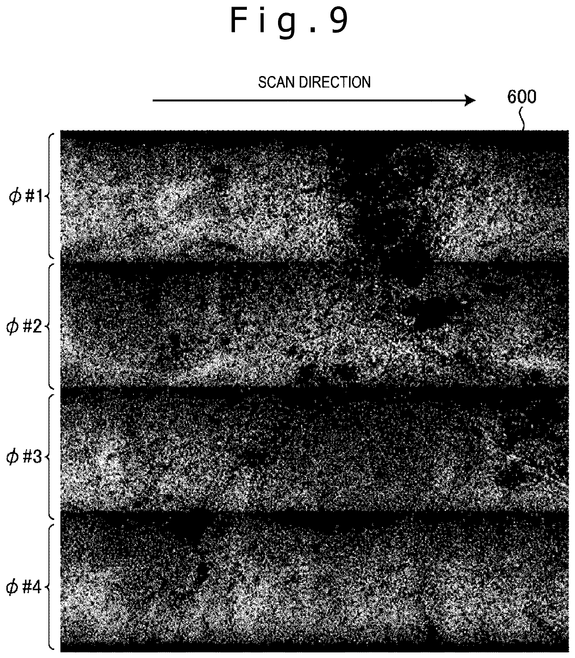

Fig. 9 is a schematic diagram depicting an example of a WSI image 600 when the shading correction processing is not performed by the shading correction unit 60 according to an existing technology. As described with reference to Fig. 6, the scan of the capturing position in the x direction is repeated in the y direction, the bands #1, #2, ..., #M are formed, the images of all the blocks included in the bands #1, #2, ..., #M are combined, so that the WSI image 600 depicted in Fig. 9 is generated.

In a system that captures fluorescently multi-stained WSI in the existing technology, shading may appear in the WSI image 600 as artifacts in a periodic pattern with periods $\varphi$#1, $\varphi$#2, $\varphi$#3, and $\varphi$#4 corresponding to the intervals of the bands #1, #2, ... in a direction orthogonal to the scanning direction. In addition, in the WSI image 600, the relationship between wavelengths may change due to the shading, and it may be not possible to obtain a correct fluorescence image in color separation processing.

In the existing technology, shading correction is often performed using a correction coefficient calculated by capturing a test sample or the like in advance. However, because, for example, the shading characteristic differs between fluorescence wavelengths depending on the characteristic of the optical system, or the distance between elements of the optical system changes due to a change in room temperature, the shading characteristic may change during capturing. Therefore, it is difficult to cope with all variations by the method of the existing technology, and it is difficult to obtain a sufficient correction effect.

In each embodiment of the present disclosure, a correction coefficient for correcting shading is calculated for each fluorescence wavelength based on image information acquired by scan capturing. Then, by performing shading correction on the image information using the calculated correction coefficient, the shading is suppressed and artifacts caused by the shading are reduced.

In contrast, in PTL 1, a shading correction coefficient is obtained by capturing the same position a plurality of times, but fluorescence imaging is not suitable because the fluorescence of a sample fades. Further, according to PTL 1, the capturing time becomes longer as the number of times of capturing increases. According to each embodiment of the present disclosure, since the image information acquired in single capturing is summed and the correction coefficient is obtained for each fluorescence wavelength, the fluorescence image can be appropriately corrected.

Further, in NPL 1, shading correction is performed not on spectrum data but on each marker image. Therefore, it is difficult to obtain a sufficient correction effect when shading is different between wavelengths or changes with time. According to each embodiment of the present disclosure, it is possible to perform shading correction in consideration thereof.

4. First Embodiment of Present Disclosure

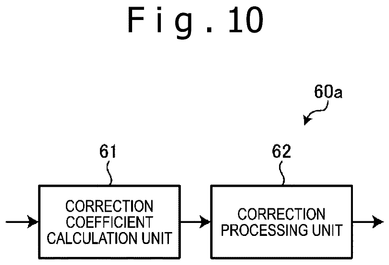

The first embodiment of the present disclosure will be described. Fig. 10 is a functional block diagram for describing functions of a shading correction unit according to the first embodiment. In Fig. 10, a shading correction unit 60a includes a correction coefficient calculation unit 61 and a correction processing unit 62.

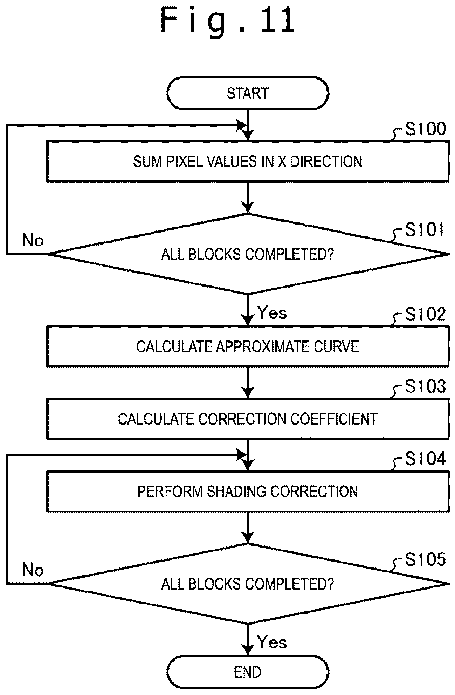

Shading correction processing according to the first embodiment will be described with reference to Figs. 11 and 12. Fig. 11 is an example of a flowchart depicting the shading correction processing according to the first embodiment. Fig. 12 is a schematic diagram for describing calculation processing of a shading correction coefficient according to the first embodiment.

In Fig. 11, in the shading correction unit 60a, the correction coefficient calculation unit 61 extracts data of each of wavelengths $\lambda_1$ to $\lambda_N$ from spectrum data 400 of one block and sums the pixel values in the x direction at each position, for example, in the y direction for each of the wavelengths $\lambda_1$ to $\lambda_N$ in step S100. In the following description, it is assumed that the summed pixel values are the luminance values of the pixels.

In next step S101, the correction coefficient calculation unit 61 determines whether or not the summation processing for all the captured blocks is completed. Upon determining that the summation processing for all the blocks is not completed ("No" in step S101), the shading correction unit 60a returns the processing to step S100. In step S100, the correction coefficient calculation unit 61 sums the luminance values in the x direction at each position, for example, in the y direction for the next block. At this time, the correction coefficient calculation unit 61 cumulatively adds the luminance values at the positions in the y direction to the pixel values summed in the processing of immediately preceding step S100.

That is, as shown in Section (a) of Fig. 12, the correction coefficient calculation unit 61 sums the luminance values in the x direction at each position in the y direction across the blocks of the band #m. The correction coefficient calculation unit 61 performs this summation processing on the bands #1 to #M, and sums, for each corresponding position in the y direction, the sums of the respective bands #1 to #M at each position in the y direction. Therefore, the summation result of all the blocks becomes values at respective positions in the y direction of one block, that is, a luminance characteristic in the y direction.

The correction coefficient calculation unit 61 obtains the luminance characteristic in the y direction for each wavelength $\lambda$ according to, for example, Equation (1). In Equation (1), I represents the luminance characteristic, S represents the spectrum data, and 1 represents the wavelength A. In Section (b) of Fig. 12, charts 450a and 450b depict examples of the luminance characteristic obtained for each wavelength $\lambda$ of the wavelengths $\lambda_1$ to $\lambda_N$ in this manner.

[Expression 1]

$$I(l, y) = \sum_{WSl} \sum_{x} S(l, x, y) \qquad \cdots (1)$$

On the other hand, upon determining that the summation processing for all the blocks is completed in step S101 ("Yes" in step S101), the correction coefficient calculation unit 61 causes the processing to proceed to step S102.

In step S102, the correction coefficient calculation unit 61 obtains an approximate curve of the luminance characteristic by the least squares method or the like, as shown in Equation (2), for example. That is, the original luminance characteristic obtained in step S100 and step S101 may include a high-frequency noise component. In this way, by obtaining the approximate curve of the luminance characteristic and using this approximate curve as the luminance characteristic, it is possible to suppress this noise component. In Section (b) of Fig. 12, charts 451a and 451b depict examples of the approximate curve of the luminance characteristic (also referred to as a luminance approximate curve) obtained for each wavelength A of the wavelengths $\lambda_1$ to $\lambda_N$ in this manner.

[Equation 2]

$$I'(l, y) = a(l) \cdot y^4 + b(l) \cdot y^3 + c(l) \cdot y^2 + d(l) \cdot y + e(l) \qquad \cdots (2)$$

In next step S103, the correction coefficient calculation unit 61 obtains a correction coefficient for performing shading correction based on the luminance characteristic obtained in step S102. More specifically, the correction coefficient calculation unit 61 obtains the reciprocal of the luminance approximate curve obtained in step S102, and normalizes the reciprocal with a reference value to obtain the correction coefficient, as shown in Equation (3), for example. In Section (b) of Fig. 12, charts 452a and 452b depict examples of the correction coefficient obtained for each wavelength $\lambda$ of the wavelengths $\lambda_1$ to $\lambda_N$ in this manner.

In the example of Equation (3), the value of the center position in the y direction is applied as the reference value. The present disclosure is not limited thereto, and the maximum value of the luminance approximate curve may be applied as the reference value. In Equation (3), C represents the correction coefficient, and $y_c$ represents the center position in the y direction.

[Equation 3]

$$C(l, y) = I'(l, y_c)/I'(l, y) \qquad \cdots (3)$$

In next step S104, in the shading correction unit 60a, the correction processing unit 62 corrects the spectrum data of all the blocks according to, for example, Equation (4) using the correction coefficient calculated by the correction coefficient calculation unit 61. In Equation (4), S' represents the corrected spectrum data obtained by correcting the spectrum data with the correction coefficient.
[Equation 4]

$$S'(l, x, y) = C(l, y) \cdot S(l, x, y) \qquad \cdots (4)$$

The color separation unit 70 performs color separation processing on the corrected spectrum data of each block based on a standard spectrum, and generates a plurality of fluorescent marker images. The stitching unit 80 combines the images of all the blocks to generate a WSI image for each fluorescent marker.

A pathological image has higher randomness and homogeneity than a general image. Therefore, in the first embodiment, regarding the image information acquired by capturing, the shading correction coefficient for performing the shading correction is calculated from the luminance characteristic obtained by performing summation for each position and for each fluorescence wavelength. Therefore, it is possible to achieve more accurate shading correction that can handle the difference in shading characteristic between wavelengths.

5. Second Embodiment of Present Disclosure

Next, a second embodiment of the present disclosure will be described. The second embodiment is an example of selecting a block or pixels to be used for calculating a correction coefficient based on luminance information of the pixels included in the block.

In the case of capturing data of a pathology slide having large spatial luminance unevenness, which includes a large number of margin portions without tissues, specifically bright spots, and the like, the luminance characteristic may change due to the influence thereof, and it may be not possible to correctly calculate a shading correction coefficient. In the second embodiment of the present disclosure, a region to be used for calculating a correction coefficient is selected from each block in correspondence with capturing data of a pathology slide having such large spatial luminance unevenness.

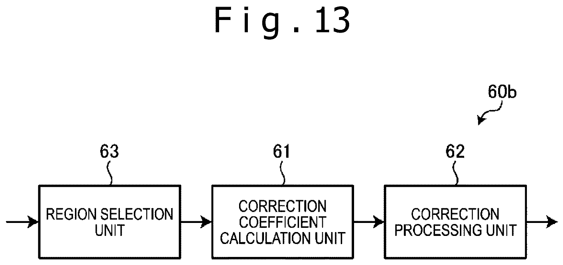

Fig. 13 is a functional block diagram for describing functions of a shading correction unit according to the second embodiment. In Fig. 13, a shading correction unit 60b includes a correction coefficient calculation unit 61, a correction processing unit 62, and a region selection unit 63.

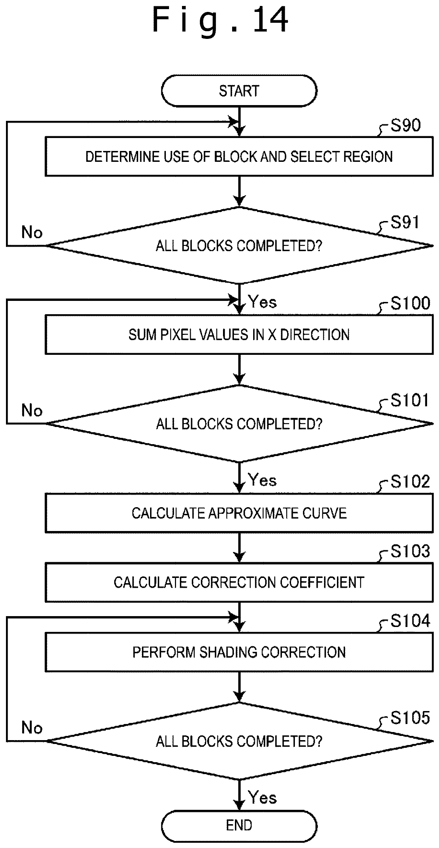

Fig. 14 is an example of a flowchart depicting shading correction processing according to the second embodiment.

In Fig. 14, in the shading correction unit 60b, the region selection unit 63 determines whether or not to use one block for calculating a correction coefficient in step S90, and selects a region in which pixel values are to be used in the block determined to be used.

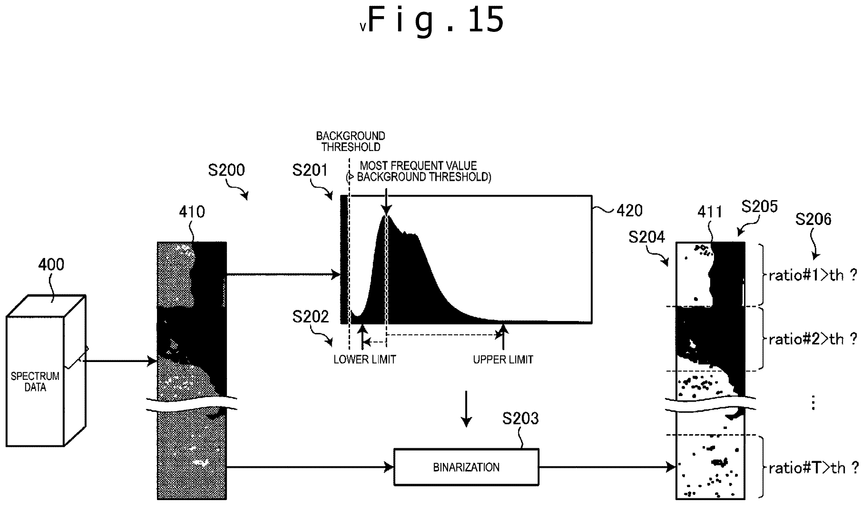

Fig. 15 is a schematic diagram for describing processing of selecting a block to be used for calculating a correction coefficient and a region in which pixel values are to be used in the block according to the second embodiment.

The region selection unit 63 sums pieces of spectrum data 400 of one block in the wavelength direction to generate an all-wavelength-summed image 410 (step S200). Next, the region selection unit 63 calculates a histogram 420 of the all-wavelength-summed image 410, and obtains a most frequent value equal to or greater than a background threshold set in advance (step S201). Next, the region selection unit 63 searches for classes having values equal to or less than 1/S of the most frequent value obtained in step S201 on the left side and the right side of the most frequent value, and sets representative luminance values of the found classes as a lower limit and an upper limit (step S202). The value S is a predetermined value set in advance and may be obtained experimentally, for example.

Next, the region selection unit 63 binarizes the all-wavelength-summed image 410 so that the values within the range between the lower limit and the upper limit obtained in step S202 are "1" (step S203), and generates a mask image 411 from the binarized values "1" and "0" (step S204). Next, the region selection unit 63 divides the mask image 411 into T regions in the y direction (step S205), and calculates the ratio "ratio" of the value "1" in each region. When the region selection unit 63 compares the ratio "ratio" with a threshold th (step S206), and there are a certain number or more of regions satisfying the ratio "ratio" > the threshold th in the mask image 411, the region selection unit 63 uses the block corresponding to the mask image 411 to calculate the correction coefficient (calculation image).

Returning to Fig. 14, the region selection unit 63 determines whether or not the processing of step S90 is completed for all the blocks in step S91. Upon determining that there is a block on which the processing of step S90 has not been performed ("No" in step S91), the region selection unit 63 returns the processing to step S90 and performs the processing of step S90 on an unprocessed block.

On the other hand, upon determining that the processing of step S90 has been performed on all the blocks ("Yes" in step S91), the region selection unit 63 causes the processing to proceed to step S100.

The processing in and after step S100 is the same as the processing in and after step S100 in the flowchart of Fig. 11, and thus the description thereof will be omitted here. In the second embodiment, in and after step S100, the block determined to be used to calculate the correction coefficient in step S90 is set as a processing target.

That is, in the second embodiment, the correction coefficient calculation unit 61 calculates the luminance characteristic and the correction coefficient using only the mask region (region of the value "1") of the block determined to be used. The correction coefficient calculation unit 61 uses, as the luminance characteristic, an average value obtained by dividing the sum in the x direction by the number of pixels in the mask region, instead of the sum. In the second embodiment, this makes it possible to suppress the influence of spatial luminance unevenness due to margins, bright spot portions, and the like, and calculate a correction coefficient with higher accuracy.

The second embodiment is not limited to the above-described example, and for example, summation may be performed on the mask regions of all the blocks without determining whether to use the blocks. Alternatively, for example, the mask does not need to be used for the block determined to be used, and the summation may be performed over the entire block. Further, for example, the binarization is performed using the histogram 420 calculated for each block in the above description, but the present disclosure is not limited to this example, and the binarization may be performed using a histogram obtained by aggregation over the entire WSI image, for example.

6. Third Embodiment of Present Disclosure

Next, a third embodiment of the present disclosure will be described. The third embodiment is an example of calculating a correction coefficient in consideration of a change in the temporal direction.

The characteristic of shading may change during capturing due to a change in the distance between elements of the illumination optical system caused by a change in room temperature. In this case, for example, in Fig. 6, the band #1 and the band #M have different shading characteristics, and thus the bands #1 and #M cannot be sufficiently corrected with the average correction coefficient obtained for the entire WSI image.

In the third embodiment, a correction coefficient calculation unit 61 and a correction processing unit 62 calculate a correction coefficient by curved surface approximation in the spatial direction and the temporal direction. This makes it possible to correct such shading that changes with time.

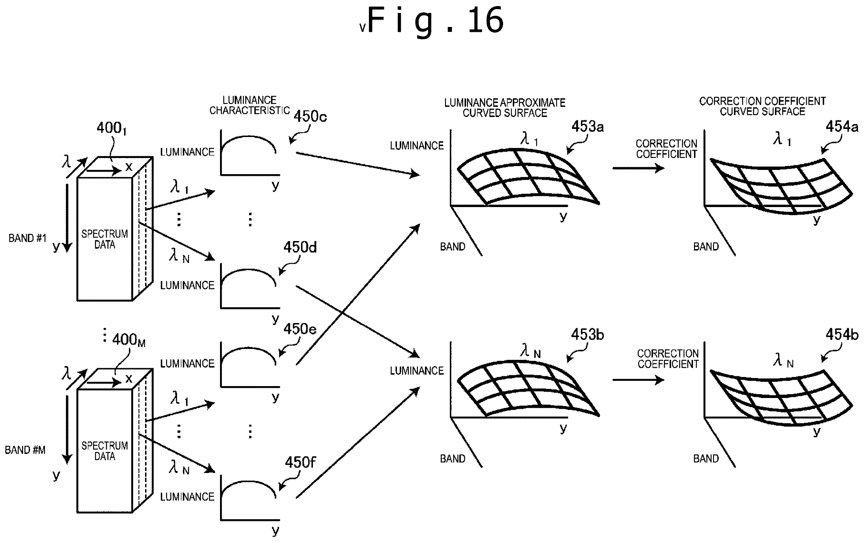

Fig. 16 is a schematic diagram for describing calculation processing of a shading correction coefficient according to the third embodiment. Note that the configuration described with reference to Fig. 10 can be applied as it is to the configuration of the shading correction unit, and thus the description thereof is omitted here.

The correction coefficient calculation unit 61 extracts data of each wavelength $\lambda$ from each of spectrum data $400_1$ to $400_M$, performs summation in the x direction for all blocks of capturing data according to, for example, Equation (5), and obtains the luminance characteristic in the y direction for each wavelength $\lambda$ and for each band. In Equation (5), I represents the luminance characteristic, S represents the spectrum data, 1 represents the wavelength, and o represents the band. In Fig. 16, charts 450c and 450d and charts 450e and 450f depict examples of the luminance characteristic obtained for each wavelength A of wavelengths $\lambda_1$ to $\lambda_N$ for each of bands #1 to #M in this manner.

[Equation 5]

$$I(l, o, y) = \sum_o \sum_x S(l, x, y) \qquad \cdots (5)$$

The correction coefficient calculation unit 61 obtains an approximate curved surface of the luminance characteristic by the least squares method or the like, for example, as shown in Equation (6). That is, the original luminance characteristic obtained as described above may include a high-frequency noise component. In this way, by obtaining the approximate curved surface of the luminance characteristic and using this approximate curved surface as the luminance characteristic, it is possible to suppress the noise component. In Fig. 16, charts 453a and 453b depict examples of the approximate curved surface of the luminance characteristic (also referred to as a luminance approximate curved surface) obtained for each wavelength A of the wavelengths $\lambda_1$ to $\lambda_N$ for each of the bands #1 to #M in this manner.

[Equation 6]

$$I'(l, o, y) =$$

$$a(l) \cdot o^3 + b(l) \cdot o^2 y + c(l) \cdot oy^2 + d(l) \cdot y^3 + e(l) \cdot o^2$$

$$+f(l) \cdot oy + g(l) \cdot y^2 + h(l) \cdot o + i(l) \cdot y + j$$

$$\cdots (6)$$

Next, the correction coefficient calculation unit 61 obtains the reciprocal of the luminance approximate curved surface as shown in Equation (7), and normalizes the reciprocal with a reference value to obtain a correction coefficient. In Fig. 16, charts 454a and 454b depict examples of the correction coefficient (also referred to as a correction coefficient curved surface) obtained for each wavelength $\lambda$ of the wavelengths $\lambda_1$ to $\lambda_N$ for each of the bands #1 to #M.

In the example of Equation (7), the value of the center position in the y direction is applied as the reference value. The present disclosure is not limited thereto, and the maximum value of the luminance approximate curve may be applied as the reference value. In Equation (3), C represents the correction coefficient, and $y_c$ represents the center position in the y direction.

[Equation 7]

$$C(l, o, y) = I'(l, o, y_C)/I'(l, o, y) \qquad \cdots (7)$$

Next, the correction processing unit 62 corrects the spectrum data of all the blocks according to, for example, Equation (8) using the correction coefficient curved surface calculated by the correction coefficient calculation unit 61. In Equation (8), S' represents the corrected spectrum data obtained by correcting the spectrum data with the correction coefficient curved surface.

[Equation 8]

$$S'(l, o, x, y) = C(l, o, y) \cdot S(l, o, x, y) \qquad \cdots (8)$$

The color separation unit 70 performs color separation processing on the corrected spectrum data of each block corrected using the correction coefficient curved surface in this manner, and the stitching unit 80 combines pieces of the corrected spectrum data to generate a WSI image for each fluorescent marker. In the third embodiment, since the spectrum data is corrected for each band using the correction coefficient curved surface, the shading correction can be sufficiently performed even when the shading changes with time.

7. Fourth Embodiment of Present Disclosure

Next, a fourth embodiment of the present disclosure will be described. In the first to third embodiments described above, a pathology slide is captured by the scan capturing method. In contrast, the fourth embodiment is an example of capturing a pathology slide by a tile capturing method. In the tile capturing method, a capturing position is moved in a first direction (for example, the x direction) or a second direction (for example, the y direction) orthogonal to the first direction, and image information is output from the imaging section 50 every time the capturing position is moved.

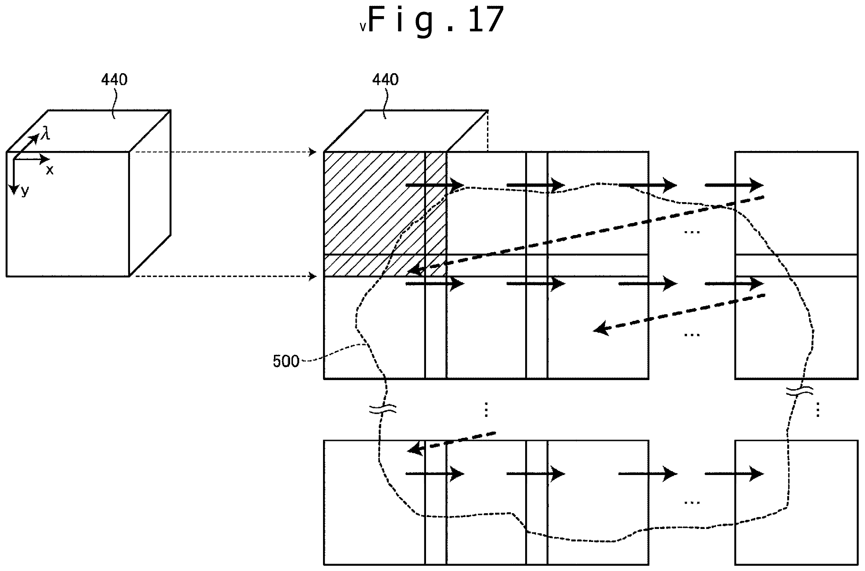

Fig. 17 is a schematic diagram depicting a configuration example of capturing data when the imaging section 50 captures a pathology slide by the tile capturing method according to the fourth embodiment. Note that the configuration described with reference to Fig. 10 can be applied as it is to the configuration of the shading correction unit, and thus the description thereof is omitted here.

In the example of Fig. 17, when capturing the pathology slide, the imaging section 50 moves the capturing position in the x direction and captures the pathology slide in a capturing range (referred to as a tile) that partially overlaps, in the x direction, the tile captured immediately before. When capturing a predetermined number of tiles in the x direction, the imaging section 50 shifts the capturing position in the y direction, performs capturing in a tile partially overlapping in the y direction, similarly moves the capturing position in the x direction, and captures the pathology slide in a tile partially overlapping, in the x direction, the tile imaged immediately before. At this time, it is preferable to move the capturing position so that an observation target 500 (for example, a tissue section) is included in each tile.

As depicted in Fig. 17, the capturing data is stored in, for example, the image information storage unit 122 (see Fig. 1) as spectrum data 440 defined by x-y coordinates and a wavelength $\lambda$ for each tile capturing. In addition, since the blocks are combined by the stitching unit 80 in the subsequent stage, the tiles are captured in a partially overlapping manner.

The spectrum data 440 acquired by capturing by the tile capturing method has non-uniformity caused by shading in the x direction and the y direction. Therefore, in the fourth embodiment, a correction coefficient calculation unit 61 and a correction processing unit 62 calculate a correction coefficient by curved surface approximation in the x direction and the y direction, and perform shading correction.

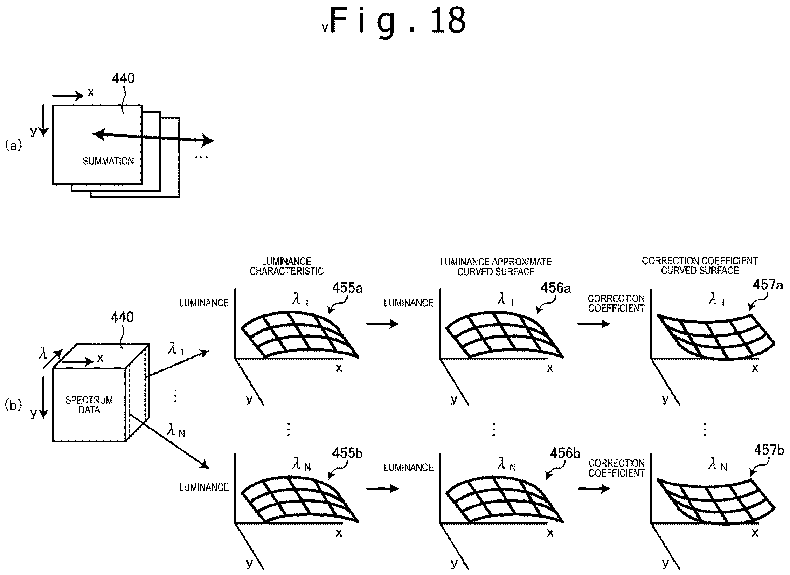

Fig. 18 is a schematic diagram for describing calculation processing of a shading correction coefficient according to the fourth embodiment. As depicted in Section (a) of Fig. 18, in the fourth embodiment, the luminance values are summed for each position in the x direction and the y direction through all the tiles. Therefore, the summation result of all the tiles is the luminance characteristic of the xy plane.

The correction coefficient calculation unit 61 extracts data of each of wavelengths $\lambda_1$ to $\lambda_N$ from the spectrum data 440 of one tile, and sums the luminance values at, for example, each position in each of the x direction and the y direction for each of the wavelengths $\lambda_1$ to $\lambda_N$.

The correction coefficient calculation unit 61 obtains the luminance characteristic of the xy plane for each wavelength $\lambda$ according to, for example, Equation (9). In Equation (9), I represents the luminance characteristic, S represents the spectrum data, and 1 represents the wavelength $\lambda$. In Section (b) of Fig. 18, charts 455a and 455b depict examples of the luminance characteristic obtained for each wavelength $\lambda$ of the wavelengths $\lambda_1$ to $\lambda_N$ in this manner. The luminance characteristic is expressed by a curved surface defined by (x, y, luminance) as depicted in each of the charts 455a and 455b.

[Equation 9]

$$I(l, x, y) = \sum_{WSI} S(l, x, y) \quad \cdots (9)$$

The correction coefficient calculation unit 61 obtains an approximate curved surface of the luminance characteristic by the least squares method or the like, for example, as shown in Equation (10). That is, the original luminance characteristic obtained as described above may include a high-frequency noise component. In this way, by obtaining the approximate curved surface of the luminance characteristic and using this approximate curved surface as the luminance characteristic, it is possible to suppress the noise component. In Section (b) of Fig. 18, charts 456a and 456b depict examples of the approximate curved surface of the luminance characteristic (luminance approximate curved surface) obtained for each wavelength $\lambda$ of the wavelengths $\lambda_1$ to $\lambda_N$ in this manner.

[Equation 10]

$$I'(l, x, y)$$
$$= a(l) \cdot x^3 + b(l) \cdot x^2 y + c(l) \cdot xy^2 + d(l) \cdot y^3 + e(l) \cdot x^2 \quad \cdots (10)$$
$$+ f(l) \cdot xy + g(l) \cdot y^2 + h(l) \cdot x + i(l) \cdot y + j$$

The correction coefficient calculation unit 61 obtains a correction coefficient for performing shading correction based on the luminance approximate curved surface obtained as described above. More specifically, the correction coefficient calculation unit 61 obtains the reciprocal of the luminance approximate curved surface, normalizes the reciprocal with a reference value, and obtains the correction coefficient, as shown in Equation (11), for example. In Section (b) of Fig. 18, charts 457a and 457b depict examples of the correction coefficient (correction coefficient curved surface) obtained for each wavelength $\lambda$ of the wavelengths $\lambda_1$ to $\lambda_N$ in this manner.

In the example of Equation (11), the value of the center position in each of the x direction and the y direction is applied as the reference value. The reference value is not limited thereto, and the maximum value of the luminance approximate curved surface may be applied as the reference value. In Equation (11), C represents the correction coefficient, $x_c$ represents the center position in the x direction, and $y_c$ represents the center position in the y direction.

[Equation 11]

$$C(l, x, y) = I'(l, x_c, y_c) / I'(l, x, y) \quad \cdots (11)$$

The correction processing unit 62 corrects the spectrum data 440 of all the tiles according to, for example, Equation (12) using the correction coefficient curved surface calculated by the correction coefficient calculation unit 61. In Equation (12), S' represents the corrected spectrum data obtained by correcting the spectrum data 440 with the correction coefficient.

[Equation 12]

$$S'(l, x, y) = C(l, x, y) \cdot S(l, x, y) \qquad \cdots (12)$$

The color separation unit 70 generates a fluorescent marker image by performing color separation processing on the corrected spectrum data of each tile, and the stitching unit 80 generates a WSI image for each fluorescent marker by combining the tile fluorescent marker images.

In this manner, the technology of the present disclosure is also applicable to the tile capturing method. The fourth embodiment can be combined with the method of calculating the correction coefficient in consideration of a change in the temporal direction described in the third embodiment.

Note that the effects described in the present specification are mere examples, effects are not limited thereto, and other effects may be added.

Note that the present technology can also have the following configurations.

(1) An information processing apparatus including

a calculation unit configured to calculate a correction coefficient per fluorescence wavelength, based on a captured image output from an imaging section, the correction coefficient being a coefficient for correcting shading of the captured image, and
a correction unit configured to perform shading correction on the captured image per fluorescence wavelength, based on the correction coefficient.

(2) The information processing apparatus according to (1) described above, wherein

the captured image is captured while a capturing position is moved in a first direction, the capturing position is changed in a second direction orthogonal to the first direction at an end of a capturing range in the first direction, and the captured image is captured while the capturing position is moved in the first direction again, and
the calculation unit calculates the correction coefficient, based on curve approximation with respect to the second direction.

(3) The information processing apparatus according to (2) described above, wherein
the calculation unit generates the curve approximation, based on a sum obtained by summing pixel values in the first direction.

(4) The information processing apparatus according to any of (1) to (3) described above, further including
a selection unit configured to select, based on pixel values of the captured image, the captured image as a calculation image to be used for calculation of the correction coefficient by the calculation unit.

(5) The information processing apparatus according to (4) described above, wherein
the selection unit performs, for a respective divided region obtained by dividing a binarized image obtained by binarization of the pixel values of the captured image, threshold determination on a ratio of respective values obtained by the binarization, and selects the captured image as the calculation image based on a result of the threshold determination.

(6) The information processing apparatus according to (5) described above, wherein
the selection unit performs the binarization based on a most frequent value in a histogram of the pixel values of the captured image.

(7) The information processing apparatus according to any of (4) to (6) described above, wherein
the selection unit selects, based on pixel values of a plurality of the captured images, the captured images as the calculation image.

(8) The information processing apparatus according to any of (1) to (7) described above, wherein

the captured image is captured while a capturing position is moved in a first direction, the capturing position is changed in a second direction orthogonal to the first direction at an end of a capturing range in the first direction, and the captured image is captured while the capturing position is moved in the first direction again, and
the calculation unit calculates the correction coefficient, based on curved surface approximation with respect to the first direction and a time at which the captured image is captured.

(9) The information processing apparatus according to any of (1) to (8) described above, wherein

the captured image is output from the imaging section every time a capturing position is moved in a first direction or a second direction orthogonal to the first direction, and

the calculation unit calculates the correction coefficient based on curved surface approximation with respect to the first direction and the second direction.

(10) An information processing method including

a calculation step of calculating a correction coefficient per fluorescence wavelength based on a captured image output from an imaging section, the correction coefficient being a coefficient for correcting shading of the captured image, and
a correction step of performing shading correction on the captured image per fluorescence wavelength based on the correction coefficient, the calculation step and the correction step being executed by a processor.

(11) An information processing system including

an imaging apparatus,
a moving mechanism configured to move the imaging apparatus at least in parallel with respect to a specimen, and
an information processing apparatus configured to receive an input of a captured image output from the imaging apparatus, wherein
the information processing apparatus

calculates a correction coefficient per fluorescence wavelength based on a captured image captured by the imaging apparatus, the correction coefficient being a coefficient for correcting shading of the captured image, and

performs shading correction on the captured image per fluorescence wavelength based on the correction coefficient.

Reference Signs List

1 Information processing system
20 Specimen
50 Imaging section
60, 60a, 60b Shading correction unit
61 Correction coefficient calculation unit
62 Correction processing unit
63 Region selection unit
70 Color separation unit
80 Stitching unit
100 Information processing apparatus
102 Stage
103 Optical system
112 Image acquisition unit
131 Analysis unit
400, $400_1$, $400_M$, 440 Spectrum data
410 All-wavelength-summed image
411 Mask image
420 Histogram

**Claims**

1. An information processing apparatus, comprising:

a calculation unit configured to calculate a correction coefficient per fluorescence wavelength, based on a captured image output from an imaging section, the correction coefficient being a coefficient for correcting shading of the captured image; and

a correction unit configured to perform shading correction on the captured image per fluorescence wavelength, based on the correction coefficient.

2. The information processing apparatus according to claim 1, wherein

   the captured image is captured while a capturing position is moved in a first direction, the capturing position is changed in a second direction orthogonal to the first direction at an end of a capturing range in the first direction, and the captured image is captured while the capturing position is moved in the first direction again, and
   the calculation unit calculates the correction coefficient, based on curve approximation with respect to the second direction.

3. The information processing apparatus according to claim 2, wherein
   the calculation unit generates the curve approximation, based on a sum obtained by summing pixel values in the first direction.

4. The information processing apparatus according to claim 1, further comprising
   a selection unit configured to select, based on pixel values of the captured image, the captured image as a calculation image to be used for calculation of the correction coefficient by the calculation unit.

5. The information processing apparatus according to claim 4, wherein
   the selection unit performs, for a respective divided region obtained by dividing a binarized image obtained by binarization of the pixel values of the captured image, threshold determination on a ratio of respective values obtained by the binarization, and selects the captured image as the calculation image based on a result of the threshold determination.

6. The information processing apparatus according to claim 5, wherein
   the selection unit performs the binarization based on a most frequent value in a histogram of the pixel values of the captured image.

7. The information processing apparatus according to claim 4, wherein
   the selection unit selects, based on pixel values of a plurality of the captured images, the captured images as the calculation image.

8. The information processing apparatus according to claim 1, wherein

   the captured image is captured while a capturing position is moved in a first direction, the capturing position is changed in a second direction orthogonal to the first direction at an end of a capturing range in the first direction, and the captured image is captured while the capturing position is moved in the first direction again, and
   the calculation unit calculates the correction coefficient, based on curved surface approximation with respect to the first direction and a time at which the captured image is captured.

9. The information processing apparatus according to claim 1, wherein

   the captured image is output from the imaging section every time a capturing position is moved in a first direction or a second direction orthogonal to the first direction, and
   the calculation unit calculates the correction coefficient based on curved surface approximation with respect to the first direction and the second direction.

10. An information processing method comprising:

   a calculation step of calculating a correction coefficient per fluorescence wavelength based on a captured image output from an imaging section, the correction coefficient being a coefficient for correcting shading of the captured image; and
   a correction step of performing shading correction on the captured image per fluorescence wavelength based on the correction coefficient, the calculation step and the correction step being executed by a processor.

11. An information processing system comprising:

an imaging apparatus;

a moving mechanism configured to move the imaging apparatus at least in parallel with respect to a specimen; and

an information processing apparatus configured to receive an input of a captured image output from the imaging apparatus, wherein

the information processing apparatus

calculates a correction coefficient per fluorescence wavelength based on a captured image captured by the imaging apparatus, the correction coefficient being a coefficient for correcting shading of the captured image, and

performs shading correction on the captured image per fluorescence wavelength based on the correction coefficient.

# Fig.1

EP 4 733 745 A1

# Fig.2

101

107

112

103B
103D
103E
104
106

103

103C
103A

LIGHT SOURCE
DRIVING UNIT

DATA
PROCESSING
UNIT

SG    30

102

z

x,y

105

STAGE DRIVING
UNIT

# Fig.3

```
                    ┌──────────────┐
                    │    START     │
                    └──────┬───────┘
                           │              ┌S10
         ┌─────────────────▼──────────────────────────┐
         │ DETERMINE FLUORESCENT REAGENT AND SPECIMEN  │
         └─────────────────┬──────────────────────────┘
                           │              ┌S11
         ┌─────────────────▼──────────────────────────┐
         │                 STAIN                       │
         └─────────────────┬──────────────────────────┘
                           │              ┌S12
         ┌─────────────────▼──────────────────────────┐
         │     IMAGE FLUORESCENCE-STAINED SPECIMEN     │
         └─────────────────┬──────────────────────────┘
                           │              ┌S13
         ┌─────────────────▼──────────────────────────┐
         │   ACQUIRE REAGENT INFORMATION AND SPECIMEN  │
         │              INFORMATION                    │
         └─────────────────┬──────────────────────────┘
                           │              ┌S14
         ┌─────────────────▼──────────────────────────┐
         │  PERFORM IMAGE PROCESSING ON IMAGE INFORMATION │
         └─────────────────┬──────────────────────────┘
                           │              ┌S15
         ┌─────────────────▼──────────────────────────┐
         │      SEPARATE AUTOFLUORESCENCE SIGNAL AND   │
         │            FLUORESCENCE SIGNAL              │
         └─────────────────┬──────────────────────────┘
                           │              ┌S16
  No            ◇──────────▼──────────────◇
 ◄──────────────  PLURALITY OF FLUORESCENT PIGMENTS?
 │              ◇─────────────────────────◇
 │                         │ Yes          ┌S17
 │       ┌─────────────────▼──────────────────────────┐
 │       │ SEPARATE FLUORESCENCE SIGNAL OF EACH FLUORESCENT │
 │       │              PIGMENT                        │
 │       └─────────────────┬──────────────────────────┘
 │                         │              ┌S18
 └─────────────────────────▼──────────────┐
         ┌─────────────────▼──────────────────────────┐
         │        GENERATE IMAGE INFORMATION           │
         └─────────────────┬──────────────────────────┘
                           │              ┌S19
         ┌─────────────────▼──────────────────────────┐
         │        DISPLAY IMAGE INFORMATION            │
         └─────────────────┬──────────────────────────┘
                           │
                    ┌──────▼───────┐
                    │     END      │
                    └──────────────┘
```

# Fig.4

# Fig.5

1

| 50 | 60 | 70 | 80 |
|---|---|---|---|
| IMAGING SECTION | SHADING CORRECTION UNIT | COLOR SEPARATION UNIT | STITCHING UNIT |

Fig.6

# Fig. 7

# ᵥFig.8

(a)   (b)   (c)   (d)

(e)

EP 4 733 745 A1

# Fig.9

SCAN DIRECTION

# Ｆｉｇ．１０

60a

61

62

CORRECTION
COEFFICIENT
CALCULATION UNIT

CORRECTION
PROCESSING UNIT

# Fig.11

```
                    ┌─────────────┐
                    │    START    │
                    └──────┬──────┘
                           │
        ┌──────────────────┤                          ┌ S100
        │         ┌─────────▼──────────────────────┐
        │         │  SUM PIXEL VALUES IN X DIRECTION │
        │         └─────────┬──────────────────────┘
        │                   │
        │                   ▼                          ┌ S101
   No   ◄───────────────────────────────────────────
        │          ALL BLOCKS COMPLETED?
        │                   │
                          ▼ Yes                        ┌ S102
                  ┌────────────────────────────────┐
                  │    CALCULATE APPROXIMATE CURVE  │
                  └────────────────┬───────────────┘
                                   │                   ┌ S103
                  ┌────────────────▼───────────────┐
                  │  CALCULATE CORRECTION COEFFICIENT │
                  └────────────────┬───────────────┘
        ┌──────────────────────────┤                  ┌ S104
        │         ┌────────────────▼───────────────┐
        │         │    PERFORM SHADING CORRECTION   │
        │         └────────────────┬───────────────┘
        │                          │
        │                          ▼                   ┌ S105
   No   ◄───────────────────────────────────────────
        │          ALL BLOCKS COMPLETED?
                                 ▼ Yes
                         ┌─────────────┐
                         │     END     │
                         └─────────────┘
```

Fig.12

# Fig.13

60b

63

61

62

| REGION SELECTION UNIT | CORRECTION COEFFICIENT CALCULATION UNIT | CORRECTION PROCESSING UNIT |

# Fig. 14

```
                    ┌─────────────┐
                    │    START    │
                    └──────┬──────┘
                           │                            ┌S90
    ┌──────────►┌──────────▼────────────────────────┐
    │           │ DETERMINE USE OF BLOCK AND SELECT REGION │
    │           └──────────┬────────────────────────┘
    │                      │                          ┌S91
    │  No        ◇─────────▼─────────◇
    │◄───────────   ALL BLOCKS COMPLETED?
                    ◇─────────┬─────────◇
                              │ Yes                    ┌S100
    ┌──────────►┌─────────────▼───────────────┐
    │           │  SUM PIXEL VALUES IN X DIRECTION │
    │           └─────────────┬───────────────┘
    │                         │                        ┌S101
    │  No        ◇────────────▼────────────◇
    │◄───────────   ALL BLOCKS COMPLETED?
                    ◇────────────┬────────────◇
                                 │ Yes                 ┌S102
                ┌────────────────▼────────────────┐
                │   CALCULATE APPROXIMATE CURVE   │
                └────────────────┬────────────────┘
                                 │                      ┌S103
                ┌────────────────▼────────────────┐
                │  CALCULATE CORRECTION COEFFICIENT │
                └────────────────┬────────────────┘
    ┌──────────►┌────────────────▼────────────────┐   ┌S104
    │           │    PERFORM SHADING CORRECTION   │
    │           └────────────────┬────────────────┘
    │                            │                      ┌S105
    │  No        ◇───────────────▼───────────────◇
    │◄───────────   ALL BLOCKS COMPLETED?
                    ◇───────────────┬───────────────◇
                                    │ Yes
                           ┌────────▼────────┐
                           │      END        │
                           └─────────────────┘
```

EP 4 733 745 A1

# Fig.15

EP 4 733 745 A1

F i g . 17

EP 4 733 745 A1

# EP 4 733 745 A1

## INTERNATIONAL SEARCH REPORT

| International application No. |
|---|
| **PCT/JP2024/021608** |

### A. CLASSIFICATION OF SUBJECT MATTER

***G01N 21/64***(2006.01)i; ***G02B 21/00***(2006.01)i; ***G02B 21/36***(2006.01)i
FI:　G01N21/64 F; G01N21/64 E; G02B21/00; G02B21/36

According to International Patent Classification (IPC) or to both national classification and IPC

### B. FIELDS SEARCHED

Minimum documentation searched (classification system followed by classification symbols)

G01N21/00-21/958; G02B21/00-21/36; G01N33/48-33/98

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII)

### C. DOCUMENTS CONSIDERED TO BE RELEVANT

| Category* | Citation of document, with indication, where appropriate, of the relevant passages | Relevant to claim No. |
|---|---|---|
| X | JP 2008-51773 A (HAMAMATSU PHOTONICS KK) 06 March 2008 (2008-03-06) claim 4, paragraphs [0078]-[0086], [0133]-[0136], fig. 1, 4, 7, 15-18 | 1-4, 7-11 |
| A | WO 2021/157397 A1 (SONY GROUP CORPORATION) 12 August 2021 (2021-08-12) entire text, all drawings | 1-11 |
| A | JP 2012-156882 A (CANON KABUSHIKI KAISHA) 16 August 2012 (2012-08-16) entire text, all drawings | 1-11 |
| A | JP 2013-85132 A (KYOCERA DOCUMENT SOLUTIONS INC.) 09 May 2013 (2013-05-09) entire text, all drawings | 1-11 |

☐ Further documents are listed in the continuation of Box C.　　☑ See patent family annex.

| | |
|---|---|
| *　Special categories of cited documents: | "T"　later document published after the international filing date or priority date and not in conflict with the application but cited to understand the principle or theory underlying the invention |
| "A"　document defining the general state of the art which is not considered to be of particular relevance | |
| "D"　document cited by the applicant in the international application | "X"　document of particular relevance; the claimed invention cannot be considered novel or cannot be considered to involve an inventive step when the document is taken alone |
| "E"　earlier application or patent but published on or after the international filing date | |
| "L"　document which may throw doubts on priority claim(s) or which is cited to establish the publication date of another citation or other special reason (as specified) | "Y"　document of particular relevance; the claimed invention cannot be considered to involve an inventive step when the document is combined with one or more other such documents, such combination being obvious to a person skilled in the art |
| "O"　document referring to an oral disclosure, use, exhibition or other means | |
| "P"　document published prior to the international filing date but later than the priority date claimed | "&"　document member of the same patent family |

| Date of the actual completion of the international search | Date of mailing of the international search report |
|---|---|
| **09 August 2024** | **27 August 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (July 2022)

41

**INTERNATIONAL SEARCH REPORT**
Information on patent family members

International application No.

**PCT/JP2024/021608**

| Patent document cited in search report | | | Publication date (day/month/year) | Patent family member(s) | | | Publication date (day/month/year) |
|---|---|---|---|---|---|---|---|
| JP | 2008-51773 | A | 06 March 2008 | (Family: none) | | | |
| WO | 2021/157397 | A1 | 12 August 2021 | US | 2023/0071901 | A1 | |
| JP | 2012-156882 | A | 16 August 2012 | (Family: none) | | | |
| JP | 2013-85132 | A | 09 May 2013 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016099570 A

**Non-patent literature cited in the description**

- **SNEHA BERRY**. Analysis of multispectral imaging with the AstroPath platform informs efficacy of PD-1 blockade. *SCIENCE*, 11 June 2021, vol. 372 (6547), <https://www.science.org/doi/10.1126/science. aba2609>